# EUROPÄISCHE PATENTSCHRIFT

(11) **EP 4 147 118 B1**
(45) Veröffentlichungstag und Bekanntmachung des Hinweises auf die Patenterteilung: **18.09.2024**
(21) Anmeldenummer: 21727371.3
(22) Anmeldetag: 03.05.2021
(51) Int. Cl.: G06F 3/0338, G06F 3/0354, G06F 3/01

(54) **EINGABEVORRICHTUNG**
INPUT DEVICE
DISPOSITIF D'ENTRÉE

(30) Priorität: 05.05.2020 WO PCT/EP2020/062451
(43) Veröffentlichungstag der Anmeldung: 15.03.2023
(73) Patentinhaber: Tekerlek, Korkut, 8185 Winkel (CH)
(72) Erfinder: Tekerlek, Korkut, 8185 Winkel (CH)
(74) Vertreter: Keller Schneider Patent- und Markenanwälte AG
(86) Internationale Anmeldenummer: PCT/EP2021/061565
(87) Internationale Veröffentlichungsnummer: WO 2021/224181

(56) Entgegenhaltungen:
- DE-A1- 10 063 760
- DE-A1- 10 063 760
- US-A- 5 504 502
- US-A- 5 504 502
- US-A1- 2007 247 446
- US-A1- 2007 247 446
- HARDING C ET AL: "A multi-sensory system for the investigation of geoscientific data", COMPUTERS AND GRAPHICS, ELSEVIER, GB, vol. 26, no. 2, 1 April 2002 (2002-04-01), pages 259 - 269, XP004357688, ISSN: 0097-8493, DOI: 10.1016/S0097-8493(02)00057-2
- HARDING C ET AL: "A multi-sensory system for the investigation of geoscientific data", COMPUTERS AND GRAPHICS, ELSEVIER, GB, vol. 26, no. 2, 1 April 2002 (2002-04-01), pages 259 - 269, XP004357688, ISSN: 0097-8493, DOI: 10.1016/S0097-8493(02)00057-2

## Beschreibung

### Technisches Gebiet

Die Erfindung betrifft eine Eingabevorrichtung, insbesondere für ein elektronisches Gerät, vorzugsweise für einen Gamecontroller, umfassend ein Betätigungselement zur Betätigung der Eingabevorrichtung durch einen Benutzer mit einem von ausserhalb der Eingabevorrichtung zugänglichen Betätigungsabschnitt, wobei das Betätigungselement vom Benutzer in mehrere, einen Betätigungsbereich definierende Betätigungsstellungen bringbar ist, wobei das Betätigungselement durch Verschieben in eine oder mehrere, insbesondere im Wesentlichen in einer Verschiebeebene liegende, Verschieberichtungen in die Betätigungsstellungen verschiebbar ist und elektronische Positionserfassungsmittel vorhanden sind, welche direkt oder indirekt eine momentane Betätigungsstellung des Betätigungselements erfassen.

### Stand der Technik

Elektronische Geräte aus einer Vielzahl von technischen Bereichen weisen heutzutage vermehrt Benutzerschnittstellen auf, welche ein zweidimensionales Display umfassen. Derartige Benutzerschnittstellen weisen oft Eingabevorrichtungen auf, welche es einem Benutzer ermöglichen, z.B. einen Cursor oder ein anderes grafisches Objekt in der durch den Bildschirm vorgegebenen zweidimensionalen Bildebene zu bewegen und an einer gewünschten Stelle zu platzieren. Typischerweise kommen hierbei so genannte Joysticks, Richtungsschieber oder analoge Vier-Punkte Taster zum Einsatz, mit welchen sich eine gewünschte Richtung eingeben lässt. Richtungseingabegeräte können aber auch bei eindimensionale Eingaben zur Anwendung kommen wie z.B. Richtungsschieber oder Scrollräder, mit welchen beispielsweise ein Cursor sequenziell durch eine vorgegebene Auswahl von Einträgen wie z.B. ein Menu gesteuert werden kann. Derartige Eingabevorrichtungen kommen z.B. bei GPS Navigationsgeräten, bei der Steuerung einer Fahrzeugelektronik und insbesondere auch im Bereich von Gamecontrollern bei Computerspielanwendungen zum Einsatz.

In der US 2007/247446 A1 der Avago Technologies Limited ist ein Beispiel einer Eingabevorrichtung beschrieben, welche dazu ausgelegt ist, Funktionen eines elektronischen Geräts zugeordnete Nutzereingaben zu erfassen. Weiter ist in der US 5,504,502 der Fujitsu Limited ein Zeigersteuergerät zum Bewegen eines Cursors auf einem Bildschirm eines Computers zu einer gewünschten Position auf dem Bildschirm beschrieben, während in der DE 100 63 760 A1 der Robert Bosch GmbH ein Betätigungselement für ein Bedienelement zur Bedienung eines elektrischen Geräts beschrieben ist.

Bekannte Joysticks weisen typischerweise einen kippbaren Hebel auf, wobei die I<ipprichtung als Bewegungsrichtung auf die zweidimensionale Bildebene des Bildschirms abgebildet wird. Eine Stärke der Eingabe kann z.B. proportional zu einem Grad der Kippung sein. Auf diese Weise kann z.B. ein grafisches Objekt eines Computerprogramms, insbesondere eine Spielfigur eines Computerspiels, in der Bildebene positioniert oder in einem virtuellen zwei- oder dreidimensionalen Raum gesteuert werden. Der Grad der Kippung, d.h. die Stärke der Eingabe, bestimmt z.B. die Geschwindigkeit, mit welcher eine Bewegung im virtuellen Raum erfolgt.

Typischerweise werden derartige Joysticks im Falle von Gamecontrollern mit dem Daumen gesteuert während der Rest der Hand den Gamecontroller hält. Die Joysticks sind daher vergleichsweise kurz, damit ohne Griffwechsel ein Betätigungsbereich der Eingabevorrichtung mit dem Daumen erreicht werden kann. Entsprechend ist ein durch die Hebellänge vorgegebener Kippradius im Vergleich zu ergonomisch angenehmen Bewegungsradien klein, d.h. der Joystick kippt unter dem Finger weg, wobei der Finger der Bewegungsbahn des Joysticks nicht auf natürliche Weise folgen kann. Insbesondere kann es vorkommen, dass der Finger überstreckt werden muss, um den Joystick über diesen hinweg bis an den Rand seines Betätigungsbereichs zu kippen. Entsprechend kann es bei einer Benutzung zu Beschwerden oder gar Schäden am Bewegungsapparat eines Benutzers kommen.

Andere Richtungseingabegeräte wie z.B. zweidimensionale Richtungsschieber haben ebenfalls den Nachteil, dass die geradlinige Bewegung keiner natürlichen Bewegung entspricht und es beim Benutzer zu Beschwerden kommen kann. Zudem kann der Benutzer aus der Position des Schiebers nur bedingt Rückschlüsse über einen Eingabegrad erhalten, was im Gegensatz dazu bei kippbaren Joysticks aufgrund des I<ippgrades einfach wahrnehmbar ist.

Gerade bei Computerspielanwendungen kann es vorkommen, dass derartige Eingabegeräte von einem Benutzer über einen verhältnismässig langen Zeitraum zu bedienen sind, was die Möglichkeit von Schäden am Bewegungsapparat des Benutzers erhöht. Insbesondere sind auch mit dem Aufkommen moderner Gamel<onsolen Computerspiele einem breiten Publikum zugänglich geworden, womit ein beträchtlicher Bedarf für Eingabegeräte besteht, welche eine ergonomische und komfortable Bedienung erlauben.

### Darstellung der Erfindung

Aufgabe der Erfindung ist es daher, eine dem eingangs genannten technischen Gebiet zugehörende Eingabevorrichtung für ein elektronisches Gerät, insbesondere einen Gamecontroller, bereitzustellen, welche auf konstruktiv einfache Weise eine ergonomische und komfortable Betätigung bzw. Bedienung durch einen Benutzer erlaubt.

Die Lösung der Aufgabe ist durch die Merkmale des Anspruchs 1 definiert. Gemäss der Erfindung umfasst eine Eingabevorrichtung, insbesondere für ein elektronisches Gerät, vorzugsweise für einen Gamecontroller, ein Betätigungselement zur Betätigung der Eingabevorrichtung durch einen Benutzer mit einem von ausserhalb der Eingabevorrichtung zugänglichen Betätigungsabschnitt, wobei das Betätigungselement vom Benutzer in mehrere, einen Betätigungsbereich definierende Betätigungsstellungen bringbar ist. Dabei ist das Betätigungselement durch Verschieben in eine oder mehrere, insbesondere im Wesentlichen in einer Verschiebeebene liegende, Verschieberichtungen in die Betätigungsstellungen verschiebbar. Die Eingabevorrichtung umfasst zudem elektronische Positionserfassungsmittel, welche direkt oder indirekt eine momentane Betätigungsstellung des Betätigungselements erfassen. Erfindungsgemäss ist das Betätigungselement in einer zu einer jeweils momentanen Verschieberichtung senkrecht ausgerichteten momentanen Hubrichtung beweglich in der Eingabevorrichtung geführt und es ist eine Steuerungsvorrichtung vorhanden, mit welcher bei einer Verschiebung des Betätigungselements im Betätigungsbereich in die eine oder mehreren Verschieberichtungen eine Hubbewegung des Betätigungselements in der momentanen Hubrichtung in Abhängigkeit der Verschiebung des Betätigungselements steuerbar bzw. gesteuert ist, wobei durch die Steuervorrichtung ein Hubprofil eines Punktes des Betätigungselements bestimmt ist, wobei das Hubprofil eine Bahn bezeichnet, welche der Punkt des Betätigungselements bei überlagerter Hubbewegung und Verschiebung ausführt.

Auf diese Weise wird erreicht, dass das Betätigungselement in Abhängigkeit einer momentanen Betätigungsstellung unterschiedliche Hubstellungen aufweisen kann, d.h. beim Verschieben in die eine oder mehreren Verschieberichtungen eine Hubbewegung in der momentanen Hubrichtung ausführt. Beispielsweise kann das Betätigungselement mit zunehmender Verschiebung aus einer Neutralstellung zunehmend in die Eingabevorrichtung abgesenkt oder aus dieser angehoben werden kann. Gerade bei einer Ausbildung als z.B. ein mit einem Finger bedienbarer Joystick eines Gamecontrollers kann somit sichergestellt werden, dass mit zunehmender Verschiebung des Betätigungselements der Finger nicht überstreckt wird und die bereitgestellte gekoppelte Verschiebbarkeit und Hubbeweglichl<eit des Betätigungselements einer natürlicheren Bewegung des Fingers entspricht. Insbesondere kann erfindungsgemäss beim Verschieben die Hubbewegung vom Finger des Benutzers weg bzw. zu diesem hin erfolgen.

Die Steuervorrichtung kann durch einen Benutzer anpassbar ausgebildet sein, sodass ein Hubprofil vom Benutzer an die persönlichen Bedürfnisse angepasst werden kann. Neben einer komfortablen Betätigung kann somit z.B. bei Langzeitbenutzung Gelenl<schäden vorgebeugt werden. Ebenso kann die durch die Steuervorrichtung erreichte und in Abhängigkeit der Verschiebung gesteuerte Hubbewegung des Betätigungselements die subjektive Wahrnehmung der Betätigung beim Benutzer verstärken bzw. al<zentuieren. Es versteht sich, dass je nach Anwendung auch kombinierte Hubprofile mit Absenken und Anheben in Abhängigkeit der Verschiebung in einer Verschieberichtung vorteilhaft sein können.

"Betätigungselement" bezeichnet vorliegend ein Element, welches von einem Benutzer mechanisch betätigt werden kann und durch Lageänderung in der Form einer transversalen Verschiebung in unterschiedliche Verschiebestellungen bringbar ist. Das Betätigungselement kann z.B. einen verschiebbareren I<nopf oder einen Hebel umfassen, insbesondere in der Form eines Joysticks. Vorzugsweise ist das Betätigungselement länglich ausgebildet und mit einer Längsachse in der jeweils momentanen Hubrichtung ausgerichtet.

Der "Betätigungsabschnitt" des Betätigungselements bezeichnet einen Bereich oder eine Struktur, welcher bzw. welche zur Interaktion des Benutzers mit dem Betätigungselement vorgesehen ist. Die Ausbildung und Anordnung des Betätigungsabschnitts gibt vorzugsweise eine Auflagerichtung vor, in welcher ein Kontakt des Benutzers mit dem Betätigungselement vorgesehen ist. Beispielsweise kann der Betätigungsabschnitt eine tellerförmige Mulde zur Auflage eines Fingers oder einen Griff zum Greifen mit der ganzen Hand umfassen. Im Falle einer Mulde für einen Finger wird der Finger in der durch die Ausbildung der Mulde vorgegebenen Auflagerichtung aufgelegt, im Falle eines Griffs kann eine Auflagerichtung durch den Griff vorgegeben sein. Vorzugsweise entspricht die Auflagerichtung der jeweils momentanen Hubrichtung, sodass die Wirkung der erfindungsgemäss gesteuerten Hubbewegung optimal vom Benutzer wahrnehmbar ist. Der Betätigungsabschnitt ragt bevorzugt derart über die weiteren Komponenten der Eingabevorrichtung nach aussen, dass er im gesamten Betätigungsbereich auf einfache und komfortable Weise für einen Benutzer zugänglich ist.

Der "Betätigungsbereich" bezeichnet einen Bereich, in welchem das Betätigungselement in die eine oder mehreren Betätigungsstellungen verschoben werden kann. Der Betätigungsbereich ist somit als der Bereich definiert, welcher von der Gesamtheit der möglichen Betätigungsstellungen gebildet wird. Durch die verschiedenen Betätigungsstellungen sind auch die eine oder mehreren Verschieberichtungen vorgegeben, welche die Richtung eines Übergangs zwischen zwei Betätigungsstellungen bezeichnen. Bevorzugt können kontinuierlich verteilte Betätigungsstellungen im Betätigungsbereich eingenommen werden, d.h. jede Stellung im Betätigungsbereich stellt eine Betätigungsstellung dar. Der Betätigungsbereich kann ein geradliniger Bereich sein, sodass nur zwei entgegengesetzt gerichtete Verschieberichtungen bestehen und das Betätigungselement im Sinne eines linearen Schiebers verschiebbar ist. Vorzugsweise ist der Betätigungsbereich jedoch flächig, sodass das Betätigungselement in zwei Dimensionen verschoben werden kann. Der Betätigungsbereich kann je nach gewünschter Anwendung unterschiedlich und z.B. kreisförmig, kreuzförmig oder rechteckig geformt sein.

Die "Verschiebung" des Betätigungselements bezeichnet eine im Wesentlichen translatorische Bewegung des Betätigungselements, insbesondere in einer transversalen Verschieberichtung, welche mit Vorteil quer zu einer vorgesehenen Auflagerichtung der Hand oder eines Fingers des Benutzers steht. Eine im Wesentlichen translatorische Bewegung bezeichnet eine Bewegung, welche vornehmlich translatorisch ist, jedoch unter Umständen geringfügige Komponenten einer Rotationsbewegung enthalten kann. Entsprechend kann die Verschiebung des Betätigungselements in wenigstens einer der einen oder mehreren Verschieberichtungen einer leicht gekrümmten Bahn folgen, wobei "leicht gekrümmt" hier einen minimalen Krümmungsradius bezeichnet, welcher grösser, bevorzugt wenigstens doppelt so gross ist, wie eine maximale Dimension des Betätigungsbereichs in dieser Verschieberichtung. In diesem Fall können die momentanen Verschiebungsrichtungen geringfügig aus der Verschiebeebene herausragen. Bevorzugt ist die Verschiebung jedoch eine rein translatorische Bewegung, in welcher alle Punkte des Betätigungselements bei einer Betätigung dieselbe Verschiebung, d.h. eine Parallelverschiebung erfahren.

Die "momentane Verschieberichtung" bezeichnet hierbei diejenige Richtung im dreidimensionalen Raum, in welche das Betätigungselement gerade verschoben wird. Die Gesamtheit der möglichen momentanen Verschieberichtungen liegt bevorzugt im Wesentlichen in der Verschiebebene, d.h. die momentanen Verschieberichtungen weisen nur geringfügige Abweichungen von bevorzugt weniger als 15° aus der Verschiebeebene auf. Die Verschiebeebene bestimmt sich dabei als diejenige Ebene, in welcher eine gemittelte Abweichung aller momentanen Verschieberichtungen minimal ist. Bei symmetrischen bezüglich der Neutralstellung ausgebildeten Betätigungsbereichen ist die Verschiebeebene damit in der Regel als diejenige Ebene definiert, welche senkrechtauf der momentanen Hubrichtung steht, wenn sich das Betätigungselement in der Neutralstellung befindet. Bevorzugt liegt die Gesamtheit aller momentanen Verschieberichtungen jedoch strikt in der Verschiebeebene.

Die "elektronischen Positionserfassungsmittel" können jede Art von bekannten Erfassungsmitteln umfassen, welche dazu geeignet sind, eine Betätigungsstellung des Betätigungselements zu erfassen und in elektronische Signale umzuwandeln. Die elektronischen Signale können in der Folge von einer internen oder externen Auswerteeinheit verwertet werden. Bekannte derartige Erfassungsmittel basieren z.B. auf optischen, elektrischen, magnetischen und/oder elektrostatischen Erfassungsprinzipien und umfassen beispielsweise in der Eingabevorrichtung angeordnete Sensoren, die am Betätigungselement angeordnete Referenzmarker detektieren oder am Betätigungselement angebrachte Sensoren, welche in der Eingabevorrichtung angeordnete Referenzmarker detektieren. Dem Fachmann sind zahlreiche geeignete Erfassungsmittel bekannt und es wird auf die einschlägige Literatur verwiesen.

Die "momentane Hubrichtung" ist erfindungsgemäss senkrechtzur jeweils momentanen Verschieberichtung angeordnet. Das Betätigungselement kann aufgrund der beweglichen Lagerung eine Hubbewegung in der momentanen Hubrichtung ausführen. Hierzu ist das Betätigungselement bevorzugt in einer zur jeweils momentanen Verschieberichtung senkrecht ausgerichteten momentanen Hubrichtung linear beweglich in der Eingabevorrichtung geführt. Besonders bevorzugt ist das Betätigungselement hierzu an einer weiteren Komponente der Eingabevorrichtung in einer Linearführung geradlinig beweglich gelagert, wobei die Führungsrichtung der Linearführung jeweils in Richtung der momentanen Hubrichtung zeigt. Die Hubbewegung ist in diesem Fall eine rein translatorische Bewegung. Die Hubbewegung kann in die beiden entgegengesetzten Richtungen längs der momentanen Hubrichtung erfolgen. Bevorzugt stehen die momentanen Hubrichtungen im Wesentlichen senkrechtauf der Verschiebeebene, d.h. weisen nicht mehr als etwa 15 Grad Abweichung von einer senkrechten Ausrichtung auf. Bevorzugt ist das Betätigungselement in jeder Betätigungsstellung im Betätigungsbereich in genau einer momentanen Hubrichtung beweglich geführt.

Ein Hubprofil bezeichnet eine Bahn, welche ein Punkt des Betätigungselements bei überlagerter Hubbewegung und Verschiebung ausführt. Das Hubprofil eines Punktes des Betätigungselements ist somit erfindungsgemäss durch die Steuervorrichtung bestimmt, welche die Hubbewegung bei einer Verschiebung in die eine oder mehreren Verschieberichtungen steuert.

Wie erwähnt liegen in einer besonders bevorzugten Ausführungsform sämtliche momentanen Verschieberichtungen strikt in der Verschiebeebene. Damit stehen die momentanen Hubrichtungen in jeder Betätigungsstellung des Betätigungselements senkrechtauf der Verschiebeebene und sind längs einer gemeinsamen Hubrichtung ausgerichtet. Mit anderen Worten heisst dies, dass die momentanen Hubrichtungen in jeder Betätigungsstellung parallel zueinander ausgerichtet sind. Das Betätigungselement führt in diesem Fall bei der Verschiebung eine rein translatorische Bewegung aus, was in der Regel konstruktiv einfacher umzusetzen ist. Die mögliche Gesamtbewegung des Betätigungselements setzt sich in diesem Fall aus einer Überlagerung einer rein translatorischen Verschiebung in der Verschiebeebene und einer rein translatorischen Hubbewegung in der gemeinsamen Hubrichtung zusammen. Alternativ können die momentanen Verschieberichtungen wie erwähnt geringfügig von der Verschiebeebene abweichen, d.h. aus dieser herausragen, falls die Verschiebung z.B. einer leicht gekrümmten Bahn folgt. Die eine oder mehreren momentanen Verschieberichtungen werden in diesem Fall als im Wesentlichen in der Verschiebeebene liegend angesehen, sofern eine Abweichung von der Verschiebebene nicht mehr als 15° beträgt.

In einer bevorzugten Ausführungsform ist das Betätigungselement in der Eingabevorrichtung über eine Führungsvorrichtung in die eine oder mehreren Verschieberichtungen verschiebbar und in der jeweils momentanen Hubrichtung beweglich geführt gelagert. Die Führungsvorrichtung kann z.B. eine verschiebbar an der Eingabevorrichtung gelagerte Führungsplatte umfassen, an welcher wiederum das Betätigungselement in der momentanen Hubrichtung beweglich geführt gelagert ist. Die Führungsplatte wird in diesem Fall bei einer Verschiebung des Betätigungselements in die eine oder mehreren Verschieberichtungen zusammen mit diesem verschoben. Weiter kann die Führungsvorrichtung auch einen funktionellen Teil der Steuervorrichtung bilden, d.h. die Steuervorrichtung erfüllt eine Steuerungsfunktion für die Hubbewegung sowie eine Führungsfunktion für das Betätigungselement. Hierzu kann die Steuervorrichtung z.B. als Tisch mit einer bi-direl<tionalen Parallelogrammführung ausgebildet sein, an dessen Tischplatte das Betätigungselement angeordnet ist bzw. dessen Tischplatte das Betätigungselement bildet. Aufgrund der bi-direl<tionalen Parallelogrammführung kann die Tischplatte ohne Rotation in zwei Dimensionen transversal verschoben werden und führt dabei eine überlagerte Hubbewegung in der jeweils momentanen Hubrichtung aus.

Alternativ und je nach Anforderung ebenfalls bevorzugt kann das Betätigungselement in der Eingabevorrichtung über eine elastisches Element in die eine oder mehreren Verschieberichtungen verschiebbar und in der jeweils momentanen Hubrichtung beweglich gelagert sein. In diesem Fall ist das Betätigungselement z.B. direkt am elastischen Element in der momentanen Hubrichtung beweglich geführt gelagert, während das elastische Element fest mit der Eingabevorrichtung verbunden sein kann. Die translatorische Verschiebbarkeit des Betätigungselements kann in diesem Fall durch die Elastizität des elastischen Elements erreicht werden.

In einer weiteren bevorzugten Ausführungsform bildet eine der Betätigungsstellungen eine Neutralstellung, in welcher das Betätigungselement in Abwesenheit einer Betätigung angeordnet ist. Die Neutralstellung bildet eine ausgezeichnete Betätigungsstellung im Betätigungsbereich. Bevorzugt umfasst die Eingabevorrichtung eine Rückstellvorrichtung wie z.B. ein oder mehrere federelastische Elemente, welche das Betätigungselement in Abwesenheit einer Betätigung in die Neutralstellung zurücl<stellt.

Bevorzugt ist der Betätigungsbereich kreisförmig ausgebildet. Auf diese Weise kann das Betätigungselement ausgehend vom I<reismittelpunl<t in der Verschiebeebene in alle Verschieberichtungen gleich weit verschoben werden. Dies ist insbesondere für Anwendungen geeignet, bei welchen das Betätigungselement im Sinne eines Joysticks für Richtungseingaben auf einer zweidimensionalen Repräsentation auf einem Display zur Anwendung kommt, wie es z.B. bei Gamepads oder Navigationsgeräten häufig der Fall ist. Bevorzugt ist gegebenenfalls die Neutralstellung im Mittelpunkt des kreisförmigen Betätigungsbereichs angeordnet. Andere, je nach Anwendung möglicherweise ebenfalls bevorzugte, Ausbildungen des Betätigungsbereichs können ellipsenförmig, kreuzförmig, sternförmig oder rechteckig, insbesondere quadratisch, sein und im Falle einer eindimensionalen Verschiebbarkeit sind auch geradlinige oder schlangenlinienförmige Betätigungsbereiche denkbar.

In einer bevorzugten Ausführungsform der Erfindung ist die Steuervorrichtung derart ausgebildet, dass das Betätigungselement in der jeweils momentanen Hubrichtung zumindest teilweise in die Eingabevorrichtung absenkbar ist bzw. abgesenkt wird, wenn es in die eine oder mehreren Verschieberichtungen verschoben wird. Dies ist insbesondere vorteilhaft, wenn das Betätigungselement aus der der Neutralstellung verschoben wird. In diesem Fall führt das Betätigungselement eine Hubbewegung aus, welche in die Eingabevorrichtung hineingerichtet ist, wobei der Betätigungsabschnitt des Betätigungselements zur Eingaberichtung hin absinkt. Der Hub des Betätigungselements nimmt somit mit der Verschiebung aus der Neutralstellung ab. Bevorzugt nimmt der Hub mit zunehmender Verschiebung aus der Neutralstellung zunehmend ab.

In einer bevorzugten Ausführungsform ist die Steuervorrichtung derart ausgebildet und wirkt derart mit dem Betätigungselement zusammen, dass eine Zwangssteuerung der Hubbewegung in Abhängigkeit der Verschiebung des Betätigungselements in die eine oder mehreren Verschieberichtungen vorliegt. Eine Zwangssteuerung hat den Vorteil, dass in jeder Betätigungsstellung ein Hub des Betätigungselements zwingend vorgegeben und damit eine Stellung des Betätigungselements eindeutig bestimmt ist. Eine Zwangssteuerung kann z.B. damit erreicht werden, dass die Steuervorrichtung eine Steuerkulisse umfasst, an welcher das Betätigungselement zwangsgesteuert geführt ist.

In einer besonders bevorzugten Ausführungsform umfasst die Steuervorrichtung ein Steuerelement mit einer Steuerfläche und das Betätigungselement weist einen Steuerabschnitt zum Zusammenwirken mit der Steuerfläche auf. Dabei ist die Steuerfläche derart ausgebildet und bezüglich des Betätigungselements angeordnet, dass beim Verschieben des Betätigungselements in die eine oder mehreren Verschieberichtungen durch Zusammenwirken des Steuerabschnitts mit der Steuerfläche die Hubbewegung des Betätigungselements in der momentanen Hubrichtung steuerbar bzw. gesteuert ist. Die Ausbildung der Steuervorrichtung umfassend ein Steuerelement mit einer Steuerfläche bietet eine konstruktiv besonders einfache Lösung um die erfindungsgemässe Hubbewegung des Betätigungselements zu steuern. Der Steuerabschnitt des Betätigungselements überfährt dabei die Steuerfläche beim Verschieben des Betätigungselements, wobei ein Steuerprofil der Steuerfläche abgetastet wird. Bei einem starr ausgebildeten Betätigungselement resultiert das Steuerprofil der Steuerfläche bei einer Verschiebung somit direkt in dem Hubprofil des Betätigungselements. Der Steuerabschnitt kann dabei z.B. eine Gleitfläche aufweisen und mit dieser auf der Steuerfläche gleiten oder einen am Betätigungselement gelagerten Rollkörper wie z.B. eine Kugel umfassen, welcher bzw. welche auf der Steuerfläche abrollt.

Der Steuerabschnitt ragt mit Vorteil in der jeweils momentanen Hubrichtung in die Eingabevorrichtung hinein und die Steuerfläche ist dem Steuerabschnitt in der jeweils momentanen Hubrichtung gegenüberliegend in der Eingabevorrichtung angeordnet. In Hubrichtung gesehen sind das Betätigungselement und die Steuerfläche somit von aussen nach innen hintereinander angeordnet. Die Steuerfläche erstreckt sich bevorzugt mit ihrer Hauptausdehnung im Wesentlichen senkrecht zur jeweils momentanen Hubrichtung, d.h. im Wesentlichen parallel zum Betätigungsbereich bzw. der Verschiebebene, während das Steuerprofil der Steuerfläche in Hubrichtung variiert. Entsprechend ist der Steuerabschnitt bevorzugt dem Betätigungsabschnitt entgegengesetzt am Betätigungselement ausgebildet.

Grundsätzlich kann die Steuerfläche alternativ auch bezüglich der jeweils momentanen Hubrichtung seitlich versetzt zum Betätigungselement angeordnet sein, wobei der Steuerabschnitt des Betätigungselements sich in diesem Fall z.B. quer zur momentanen Hubrichtung zur Steuerfläche hin erstrecken kann.

Bevorzugt liegt der Steuerabschnitt des Betätigungselements in jeder Betätigungsstellung an der Steuerfläche an. Alternativ ist es auch denkbar, dass der Steuerabschnitt nur in gewissen Bereichen des Betätigungsbereichs mit der Steuerfläche zusammenwirkt und in anderen Bereichen von der Steuerfläche abgehoben ist, sodass bei einer Verschiebung in diesen Bereichen keine Hubbewegung des Betätigungselements erfolgt.

Bevorzugt ist eine Vorspannvorrichtung vorhanden, mit welcher das Betätigungselement in der jeweils momentanen Hubrichtung gegen die Steuerfläche derart vorspannbar bzw. vorgespannt ist, dass der Steuerabschnitt gegen die Steuerfläche gedrückt wird. Die Vorspannvorrichtung kann z.B. als Druckfeder oder federelastische Manschette ausgebildet sein, welche z.B. an der Führungsvorrichtung abgestützt ist und das Betätigungselement über einen daran ausgebildeten Anschlag zur Steuerfläche hin mit einer Federkraft beaufschlagt. Selbstverständlich bestehen auch zahlreiche weiteren Möglichkeiten zur Ausbildung und Anordnung einer geeigneten Vorspannvorrichtung zur Verfügung.

Gemäss einer weiteren vorteilhaften Ausführungsform ist eine magnetische Kopplung zwischen Betätigungselement und Steuerfläche vorhanden, so dass der Steuerabschnitt gegen die Steuerfläche gedrückt wird. Dies insbesondere so, dass der Steuerabschnitt in jeder Betätigungsstellung an die Steuerfläche gedrückt wird. Die magnetische Kopplung kann alternativ oder zusätzlich zur Vorspannvorrichtung vorliegen.

Die magnetische Kopplung wird bevorzugt durch die Kombination eines Elektromagneten mit einem ferromagnetischen Material erzeugt. Ein Elektromagnet hat den Vorteil, dass die Magnetkraft eingestellt werden kann. Das ferromagnetische Material kann z.B. Eisen, Kobalt und/oder Nickel sein.

Die magnetische Kopplung beinhaltet im Besonderen einen am Steuerabschnitt vorliegenden Magneten und eine Steuerfläche umfassend oder bestehend aus einem ferromagnetischen Material, oder die magnetische Kopplung beinhaltet ein Steuerabschnitt umfassend oder bestehend aus einem ferromagnetischen Material und einen im Bereich der Steuerfläche vorliegenden Magneten. Der Magnet kann dabei ein Permanentmagnet und/oder ein Elektromagnet sein.

In einer weiteren möglichen Ausführungsform wird die magnetische Kopplung durch zwei Permanentmagnete erreicht, wobei insbesondere der erste Permanentmagnet am Steuerabschnitt angeordnet ist, während der zweite Permanentmagnet im Bereich der Steuerfläche angeordnet ist. Grundsätzlich sind aber auch andere Anordnungen möglich, um eine magnetische Kopplung zu erreichen.

Um dem Benutzer eine zusätzliche Rückwirkung über das Betätigungselement bereitzustellen, kann die Steuerfläche einen oder mehrere oberflächenstrukturierte Bereiche aufweisen, mit welchen bei einem Überfahren mit dem Steuerabschnitt ein haptisches Feedback für den Benutzer am Betätigungsabschnitt erzeugbar ist. Die oberflächenstrukturierten Bereich können dabei z.B. auf einen Anschlag an einer Begrenzung des Betätigungsbereichs bei weiterer Verschiebung hinweisen. Die oberflächenstrukturierten Bereiche können jedoch auch eine von der Verschiebung des Betätigungselements abhängige Änderung des Betriebsmodus der Eingabevorrichtung oder z.B. auf eine Änderung in einem Spielmodus wie z.B. einen Übergang von "Gehen" zu "Laufen" bei ausreichender Verschiebung aus der Neutralstellung hinweisen.

Weiter ist es bevorzugt, wenn die Steuerfläche einen Begrenzer aufweist, welcher eine darüber hinausgehende Verschiebung des Betätigungselements verhindert. Insbesondere ist der Begrenzer derart ausgestaltet, dass er einen Anschlag für den Steuerabschnitt des Betätigungselements bildet.

Im Besonderen handelt es sich beim Begrenzer um einen in Hubrichtung vorstehenden Vorsprung in einem Randbereich der Steuerfläche, insbesondere um einen die Steuerfläche umlaufenden und in Hubrichtung vorstehenden Vorsprung im Randbereich der Steuerfläche.

Bevorzugt weist die Steuerfläche stattdessen oder zudem an einer oder mehreren Stellen, insbesondere gegebenenfalls in einer der Neutralstellung des Betätigungselements entsprechenden Stelle, eine Vertiefung auf, welche eine vorübergehende Ruhelage für den Steuerabschnitt definiert. Die Vertiefung ist dabei bevorzugt an die Ausbildung des Steuerabschnitts des Betätigungselements angepasst, sodass dieser in die Vertiefung eingebracht werden kann und dort in der vorübergehenden Ruhelage verbleibt. Die Vertiefung kann derart ausgebildet sein, dass das Betätigungselement entgegen einer allenfalls vorhandenen Rückstellkraft in die Neutralstellung in der Ruhelage verbleibt. Im Falle der Vorspannvorrichtung, welche das Betätigungselement in jeweils momentanen Hubrichtung gegen die Steuerfläche vorspannt, wird das Betätigungselement zusätzlich in die Vertiefung gedrückt.

In einer je nach Anwendung bevorzugten Ausführungsform umfasst das Steuerelement eine Steuerkulisse, an welcher die Steuerfläche ausgebildet ist, wobei der Steuerabschnitt derart mit der Steuerkulisse zusammen wirkt, dass eine Zwangssteuerung der Hubbewegung in Abhängigkeit der Verschiebung des Betätigungselements in die eine oder mehreren Verschieberichtungen vorliegt. Eine Zwangssteuerung über eine Steuerkulisse hat den Vorteil, dass in jeder Betätigungsstellung ein Hub des Betätigungselements zwingend vorgegeben ist. Insbesondere kann das Betätigungselement in diesem Fall nicht von der Steuerfläche abgehoben werden.

In einer bevorzugten Ausführungsform ist die Steuerfläche zumindest bereichsweise bezüglich wenigstens einer der einen oder mehreren Verschieberichtungen in der jeweils momentanen Hubrichtung zu dieser hin oder von dieser weg gekrümmt ausgebildet. Mit anderen Worten heisst dies, dass die Steuerfläche in einem Schnitt mit einer gedachten Ebene, welche senkrechtauf der Verschiebebene steht und in welcher die wenigstens eine der einen oder mehreren Verschieberichtungen liegt, ein Steuerprofil mit einer Krümmung aufweist. Die Steuerfläche kann dabei z.B. als Teilzylinderfläche oder als Kalotte ausgebildet sein. Es versteht sich, dass auch beliebig komplex gekrümmte Steuerprofile denkbar sind. In einer bevorzugen Ausführungsform ist die Steuerfläche gekrümmt und bezüglich einer senkrecht zur Verschiebeebene senkrecht ausgerichteten gedachten Achse rotationssymmetrisch ausgebildet. Dies ist insbesondere bei Ausführungsformen vorteilhaft, bei welchen der Betätigungsbereich kreisförmig ausgebildet ist. Die Krümmung kann dabei je nach gewünschtem Steuerprofil konvex und/oder konkav ausgebildet sein. Alternativ weist die Steuerfläche nur geradlinige bzw. ebene Abschnitte auf, welche an Kanten aneinanderstossen, sodass keine gekrümmten Abschnitte im Steuerprofil bestehen.

Bevorzugt ist die Steuerfläche im Wesentlichen kalottenartig gekrümmt und insbesondere als I<ugell<alotte ausgebildet und vorzugsweise zum Betätigungselement hin konvex gewölbt. Dabei weist das Steuerprofil der gekrümmt ausgebildeten Steuerfläche an einer Stelle, welcher der Position des Steuerabschnitts in der Neutralstellung des Betätigungselements entspricht, bevorzugt ein Maximum auf. Ein Maximum bezeichnet hierbei einen Bereich, welcher, insbesondere in der gemeinsamen Hubrichtung, am weitesten zur Verschiebeebene hin reicht und nur von Bereichen umgeben ist, welche einen grösseren Abstand zur Verschiebeebene aufweisen. Insbesondere im Fall einer als I<ugell<alotte ausgebildeten Steuerfläche ist der Steuerabschnitt in einem Polbereich der Steuerfläche angeordnet, wenn sich das Betätigungselement in der Neutralstellung befindet. Der Polbereich bildet dabei ein derartiges Maximum. Am Maximum weisst das Betätigungselement den grössten Hub auf, d.h. ragt am weitesten nach aussen. Es versteht sich jedoch, dass am Maximum eine lokale Vertiefung wie oben beschrieben für eine Ruhelage vorgesehen sein kann.

In einer bevorzugten Ausführungsform ist das Betätigungselement in der Form eines länglichen Hebels ausgebildet, wobei eine Längsachse des Hebels in jeder Betätigungsstellung in der jeweils momentanen Hubrichtung ausgerichtet ist. Der längliche Hebel kann dabei einen im allgemeinen Joystick bezeichnetes Betätigungselement bilden. Der Hebel kann aber z.B. auch als eindimensional verschiebbarer Hebel im Sinne eines Beschleunigungshebels oder analog einer Gangschaltung mit einer Schaltkulisse ausgebildet sein. Dabei ist insbesondere der Betätigungsabschnitt an einem ersten Längsende des Betätigungselements ausgebildet und der Steuerabschnitt an einem dem Betätigungsabschnitt in Hubrichtung gegenüberliegenden zweiten Längsende.

In einer weiteren bevorzugten Ausführungsform ist das Steuerelement derart, insbesondere federnd, auslenkbar in der Eingabevorrichtung angeordnet, dass bei einer Kraftwirkung auf das Betätigungselement in der jeweils momentanen Hubrichtung das Steuerelement über den Steuerabschnitt auslenkbar ist. Dies hat den Vorteil, dass das Steuerelement zur Betätigung eines Schalters oder eines Tasters dienen kann, in dem es über einen Betätigungsdruck in der momentanen Hubrichtung auf das Betätigungselement ausgelenkt wird. Ein entsprechender Schalter oder Taster ist dabei bevorzugt auf der dem Betätigungselement gegenüberliegenden Seite des Steuerelements angeordnet.

Mit Vorteil kann das Steuerelement von einem Benutzer justierbar in der Eingabevorrichtung angeordnet sein. Auf diese Weise kann das Hubprofil an die Bedürfnisse eines Benutzers angepasst werden, in dem die Position des Steuerelements bezüglich des Betätigungselements justiert wird. Ebenso kann die Eingabevorrichtung auf dieses Weise sofern erforderlich mechanisch kalibriert werden.

In einer weiteren vorteilhaften Ausführungsform ist das Steuerelement von einem Benutzer auswechselbar in der Eingabevorrichtung angeordnet, sodass verschiedene Steuerelemente mit unterschiedlichen Steuerflächen in die Eingabevorrichtung eingesetzt werden können. Auf diese Weise ist es möglich, unterschiedliche Hubprofile mit derselben Eingabevorrichtung umzusetzen. Ein Benutzer kann die Eingabevorrichtung somit auf einfache Weise durch auswechseln des Steuerelements an seine Bedürfnisse anpassen. Hierzu sind bevorzugt Befestigungsmittel, insbesondere Rastmittel, in der Eingabevorrichtung vorhanden, an welchen das Steuerelement mit entsprechenden Befestigungsmitteln, insbesondere Rastmitteln, von einem Benutzer befestigbar, insbesondere verrastbar, ist. Die Befestigungsmittel der Eingabevorrichtung und die Befestigungsmittel des Steuerelements sind dabei bevorzugt komplementär ausgebildet, sodass eine einfache gegenseitige Befestigung möglich ist.

Die Erfindung umfasst somit auch ein Steuerelement für eine Eingabevorrichtung, in welcher das Steuerelement auswechselbar angeordnet ist. Das Steuerelement ist dabei als separates, auswechselbares Teil ausgebildet, und weist eine, insbesondere gekrümmte, Steuerfläche zur Anlage des Steuerabschnitts des Betätigungselements der Eingabevorrichtung auf. Bevorzugt umfasst das Steuerelement dabei Befestigungsmittel, insbesondere Rastmittel, mit welchen es von einem Benutzer an Befestigungsmitteln, insbesondere Rastmitteln, der Eingabevorrichtung befestigbar, insbesondere verrastbar, ist. Die Befestigungsmittel des Steuerelements sind dabei bevorzugt komplementär zu entsprechenden Befestigungsmitteln der Eingabevorrichtung ausgebildet. Bevorzugt kann das Steuerelement z.B. in eine Haltebucht der Eingabevorrichtung eingeschoben und dort verrastet werden. Hierzu kann die Eingabevorrichtung, insbesondere in der Haltebucht. z.B. eine Einschubführung und das Steuerelement z.B. in der Einschubführung führbare Führungsleisten aufweisen, mit welchen es in die Einschubführung eingeschoben werden kann. Die Befestigungsmittel, insbesondere die Rastmittel der Eingabevorrichtung können dabei in der Haltebucht, insbesondere z.B. in der Einschubführung ausgebildet sein, sodass die entsprechenden Befestigungsmittel, insbesondere die Rastmittel, des Steuerelements beim Einschieben automatisch das Steuerelement befestigend zusammenwirken.

Die Erfindung betrifft weiter ein elektronisches Gerät, insbesondere ein mobiles elektronisches Gerät, mit einer Eingabevorrichtung gemäss der Erfindung. Das elektronische Gerät ist bevorzugt ein Gamecontroller. Die erfindungsgemässe Eingabevorrichtung kann jedoch auch mit Vorteil bei anderen elektronischen Geräten zur Anwendung kommen, welche insbesondere eine zweidimensionale Eingabe für eine Repräsentation auf einem Bildschirm erfordern wie z.B. bei einem Mobiltelefon, einem stationären oder mobilen Navigationsgerät oder einer tragbaren Spielkonsole. Besonders vorteilhaft ist auch eine Anwendung in einem elektronischen Gerät zur Installation in einem Fahrzeug, insbesondere in einem Automobil, wie z.B. einem Einbau-Navigationsgerät.

Fahrzeuge umfasst hierbei jede Art von Fahrzeugen wie z.B. Landfahrzeuge, Luftfahrzeuge oder Wasserfahrzeuge. Die erfindungsgemässe Eingabevorrichtung kann mit Vorteil auch als Bedienelement an einem Steuerrad oder einer Mittelkonsole Anwendung finden.

Die Erfindung umfasst weiter auch einen Teilesatz, umfassend eine erfindungsgemässe Eingabevorrichtung, in welcher das Steuerelement auswechselbar angeordnet ist, oder eine elektronisches Gerät umfassend eine derartige Eingabevorrichtung, sowie wenigstens ein zusätzliches Steuerelement für eine derartige Eingabevorrichtung. Das zusätzliche Steuerelement kann dabei als Ersatzteil dienen oder eine andere Steuerfläche als das Steuerelement der Eingabevorrichtung aufweisen, sodass ein Benutzer eine Hubbewegung des Betätigungselements der Eingabevorrichtung an seine Bedürfnisse individuell anpassen kann. Es versteht sich, dass auch mehr als nur ein zusätzliches Steuerelement, bevorzugt mit jeweils unterschiedlich ausgebildeten Steuerflächen vom Teilesatz umfasst sein können.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen schematisch:
- Fig. 1: eine Querschnittsansicht durch eine erfindungsgemässe Eingabevorrichtung mit einer Steuervorrichtung umfassend ein Steuerelement;
- Fig. 2: eine Querschnittsansicht einer weiteren Ausführungsform einer erfindungsgemässen Eingabevorrichtung mit einer Führungsvorrichtung umfassend eine Führungsplatte;
- Fig. 3: eine Querschnittsansicht einer weiteren Ausführungsform einer erfindungsgemässen Eingabevorrichtung mit einer Führungsvorrichtung umfassend ein elastisches Führungselement, wobei ein auswechselbares Steuerelement vorhanden ist;
- Fig. 4: eine Querschnittsansicht einer weiteren Ausführungsform einer erfindungsgemässen Eingabevorrichtung, in welcher das Steuerelement in einer Hubrichtung auslenkbar angeordnet ist;
- Fig. 5: eine Querschnittsansicht einer weiteren Ausführungsform einer erfindungsgemässen Eingabevorrichtung bei welcher ein Betätigungselement auf einer geringfügig gekrümmten Bahn verschiebbar ist;
- Fig. 6a: eine Draufsicht in Hubrichtung auf eine Eingabevorrichtung zur zweidimensionalen Richtungseingabe, deren Querschnitt der Querschnittsansicht der Fig. 2 entspricht;
- Fig. 6b: eine Draufsicht in Hubrichtung auf eine Eingabevorrichtung zur eindimensionalen Richtungseingabe, deren Querschnitt der Querschnittsansicht der Fig. 2 entspricht;
- Fig. 7a-7d: Draufsichten auf verschiedene Umrisse von möglichen Betätigungsbereichen einer erfindungsgemässen Eingabevorrichtung;
- Fig. 8a-8f: verschiedene exemplarische Querschnittsprofile für die Ausbildung einer Steuerfläche eines Steuerelements einer erfindungsgemässen Eingabevorrichtung;
- Fig. 9: eine Schrägansicht eines auswechselbaren Steuerelements einer erfindungsgemässen Eingabevorrichtung wie sie in der Fig. 3 dargestellt ist;
- Fig. 10: eine weitere Ausführungsform einer erfindungsgemässen Eingabevorrichtung, bei welcher eine Steuervorrichtung vier stabförmige Stützen aufweist,
- Fig. 11: eine weitere Ausführungsform einer erfindungsgemässen Eingabevorrichtung, bei welcher eine Steuervorrichtung drei stabförmige Stützen aufweist,
- Fig. 12: eine weitere Ausführungsform einer erfindungsgemässen Eingabevorrichtung, bei welcher die Steuervorrichtung eine einzige stabförmige Stütze aufweist,
- Fig. 13: eine weitere Ausführungsform einer erfindungsgemässen Eingabevorrichtung, welcher der in Figur 1 gezeigten Eingabevorrichtung ähnlich ist, aber eine andersartige Steuervorrichtung aufweist, und
- Fig. 14: eine Darstellung eines Betätigungselements, welches in einer erfindungsgemässen Eingabevorrichtung eingesetzt werden kann.

Grundsätzlich sind in den Figuren gleiche Teile mit gleichen Bezugszeichen versehen.

### Wege zur Ausführung der Erfindung

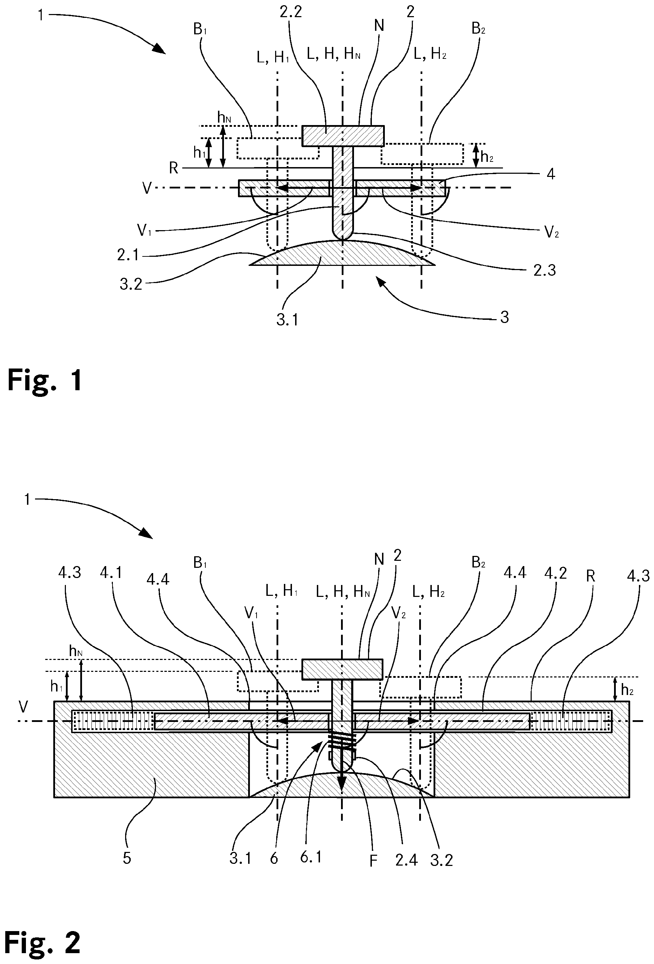

Figur 1 zeigt eine schematische Querschnittsansicht einer Eingabevorrichtung 1 gemäss der Erfindung.

Ein Betätigungselement 2 weist in dieser Ausführungsform einen stabförmigen Grundkörper 2.1 auf. Eine Längsachse L des Betätigungselements 2 ist durch die Längsachse des Grundkörpers 2.1 definiert. An einem von aussen zugänglichen Längsende des Grundkörpers 2.1 ist ein Betätigungsabschnitt 2.2 vorhanden, welcher vorliegend als tellerförmige Auflage für einen Finger eines Benutzers ausgebildet ist. An einem in Längsrichtung L gegenüberliegenden Längsende des Grundkörpers 2.1, welches in die Eingabevorrichtung 1 hineinragt, ist ein Steuerabschnitt 2.3 ausgebildet. Der Steuerabschnitt 2.3 ist in der vorliegenden Ausführungsform als kalottenförmige Abrundung des Grundkörpers 2.1 ausgebildet, kann alternativ aber z.B. auch einen oder mehrere am Grundkörper 2.1 rotierbar gelagerte Rollkörper wie z.B. eine Kugel umfassen.

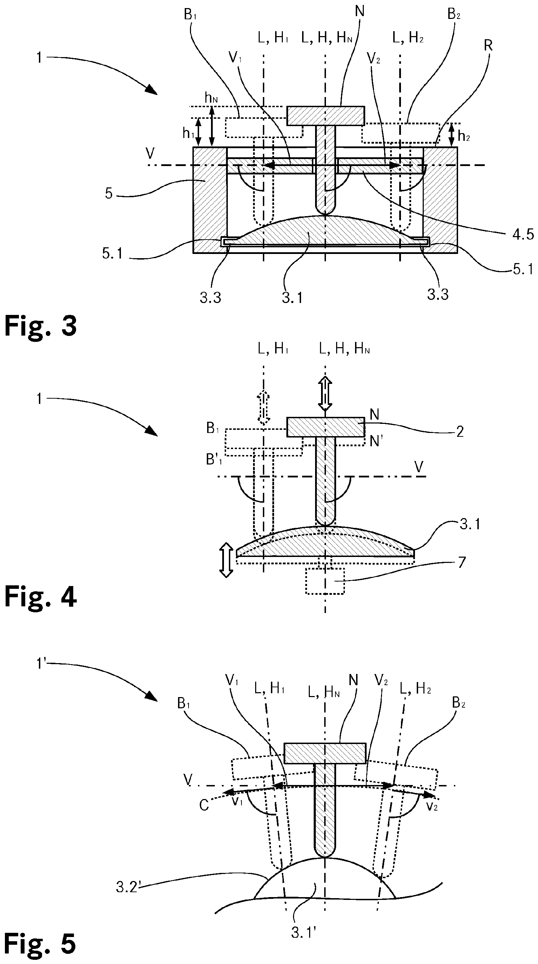

Das Betätigungselement 2 ist über eine hier nicht näher beschriebene Führungsvorrichtung 4 (siehe hierzu z.B. Fig. 2 und 3) in einer Verschiebeebene V senkrechtzur Längsachse L parallel in eine oder mehrere Betätigungsstellungen B, und B₂ (gestrichelt) verschiebbar in der Eingabevorrichtung 1 angeordnet. Dabei ist das Betätigungselement 2 in Richtung der Längsachse L beweglich an der Führungsvorrichtung 4 gelagert, sodass das Betätigungselement 2 in der Neutralstellung N und in jeder der Betätigungsstellungen B₁ und B₂ in einer Hubrichtung H_{N} bzw. H₁ und H₂, welche jeweils längs der Längsachse L ausgerichtet sind, eine Hubbewegung ausführen kann. Die Hubrichtungen H_{N}, H, und H₂ sind parallel und längs einer gemeinsamen Hubrichtung H ausgerichtet, welche senkrechtauf der Verschiebeebene V steht.

Das Betätigungselement 2 befindet sich in der Darstellung der Fig. 1 in einer Neutralstellung N, welche in durchgezogenen Linien wiedergegeben ist. In der Neutralstellung N weist das Betätigungselement 2 bezüglich einer zur Verschiebeebene V parallelen Referenzebene R einen Hub von h_{N} auf. Die Referenzebene R kann z.B. durch eine Aussenseite der Eingabevorrichtung 1 definiert sein, über welche das Betätigungselement 2 in der Neutralstellung mit dem Hub h_{N} nach aussen hinausragt.

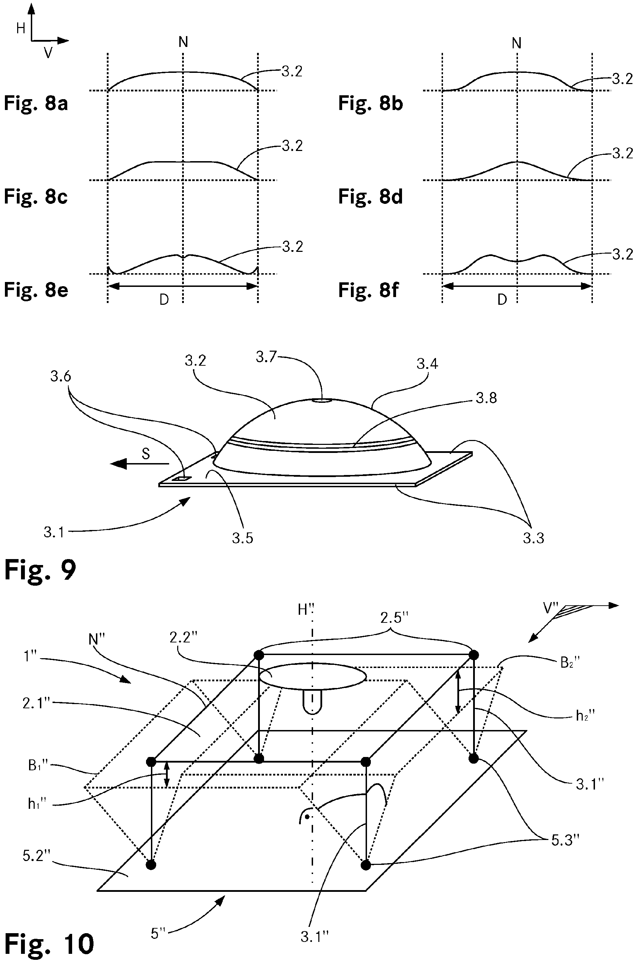

Das Betätigungselement 2 liegt mit dem Steuerabschnitt 2.3 an einer Steuerfläche 3.2 eines Steuerelements 3.1 einer Steuervorrichtung 3 der Eingabevorrichtung 1 an. Das Steuerelement 3.1 ist innerhalb der Eingabevorrichtung 1 in Längsrichtung L des Betätigungselements 2 diesem gegenüberliegend angeordnet. Die Steuerfläche 3.2 ist dem Betätigungselement 2 zugewandt. Die Steuerfläche 3.2 weist ein bezüglich der Referenzebene R ein konvex zu dieser hin gewölbtes gekrümmtes Profil auf. In der Ausführungsform der Fig. 1 ist die Steuerfläche 3.2 als I<ugell<alotte ausgebildet. Die Steuerfläche 3.2 kann jedoch auch andere Profile aufweisen (siehe z.B. Fig. 8a- 8f).

Der Steuerabschnitt 2.3 des Betätigungselements 2 ist in der Neutralstellung an einem Pol der kugelkalottenförmigen Steuerfläche 3.2 angeordnet. Die Steuerfläche 3.2 weist somit an einer der Neutralstellung N entsprechenden Position des Steuerabschnitts 2.3 ein Maximum auf, an welchem sich die Steuerfläche 3.2 am weitesten in Richtung der Hubrichtung H bzw. der Längsachse L des Grundkörpers 2.1 in Richtung zur Referenzebene R hin, d.h. auch in Richtung zu einem Aussenraum hin, erstreckt.

Das Betätigungselement 2 kann aus der Neutralstellung N durch Verschiebung in eine in der Verschiebeebene V liegende Verschieberichtung V, bzw. V₂ in die Betätigungsstellungen B, und B₂ verschoben werden. Die Verschieberichtungen V₁ und V₂ sind einander in der Darstellung der Fig. 1 entgegengerichtet. Während des Verschiebens in die Verschieberichtungen V, und V₂ wird das Betätigungselement 2 in jeder Position in einer momentanen Verschieberichtung verschoben. Die momentanen Verschieberichtungen liegen in dieser Ausführungsform sämtlich strikt in der Verschiebeebene V, womit auch momentane Hubrichtungen, definiert durch die Beweglichkeit des Betätigungselements 2 in jeder Position Längs seiner Längsachse L, senkrechtauf der jeweiligen momentanen Verschieberichtung stehen.

Bei einer Verschiebung in eine der Verschieberichtungen V₁ oder V₂ gleitet das Betätigungselement 2 mit dem Steuerabschnitt 2.3 auf der Steuerfläche 3.2. Aufgrund der konvexen Wölbung der Steuerfläche 3.2 wird das Betätigungselement 2 somit bei der Verschiebung aus der Neutralstellung N in die Verschieberichtung V, oder V₂ in der Hubrichtung H in die Eingabevorrichtung 1 abgesenkt. Damit der Steuerabschnitt 2.3 mit der Steuerfläche in Kontakt bleibt, kann z.B. eine vom Benutzer aufgewendete auf das Betätigungselement 2 wirkende Kraft in Richtung von L erforderlich sein oder es kann eine Vorspannvorrichtung 6 vorhanden sein, welche das Betätigungselement 2 mit einer Federkraft F in Richtung von L zur Steuerfläche hin beaufschlagt (siehe z.B. Fig. 2).

Aufgrund der über die Steuerfläche 3.2 auf diese Weise gesteuerten Hubbewegung des Betätigungselements 2 weist dieses in der Betätigungsstellung B, einen Hub h₁ und in der Betätigungsstellung B₂ einen Hub h₂ auf. Die Hübe h₁ und h₂ sind in der Ausführungsform der Fig. 1 jeweils kleiner als der Hub h_{N} in der Neutralstellung N. Entsprechend wird das Betätigungselement 2 bei einer Verschiebung in die Verschieberichtungen V₁ und V₂ in die Eingabevorrichtung 1 abgesenkt, sodass der Betätigungsabschnitt 2.2 des Betätigungselements 2 eine dem Profil der Steuerfläche 3.2 folgende Hubbewegung ausführt.

Es versteht sich, dass die vorgenannten Komponenten der Eingabevorrichtung 1 z.B. mit einer zugunsten einer besseren Übersichtlichkeit in der Fig. 1 nicht dargestellten Basisstruktur 5 (siehe z.B. Fig. 2) der Eingabevorrichtung 1 zusammenwirken, z.B. an dieser ausgebildet oder befestigt sind. Die Eingabevorrichtung 1 kann auch ein Gehäuse umfassen, welches die Eingabevorrichtung zumindest teilweise nach aussen begrenzt und welches in je nach Anforderung bevorzugten Ausführungsformen gleichzeitig die Basisstruktur 5 bilden kann. Ebenso versteht es sich, dass die Betätigungsstellungen B_{N}, B₁ und B₂ exemplarischen Charakter haben und das Betätigungselement 2, sofern nicht anders vermerkt, jeweils eine Vielzahl von z.B. kontinuierlich verteilten Betätigungsstellungen einnehmen kann.

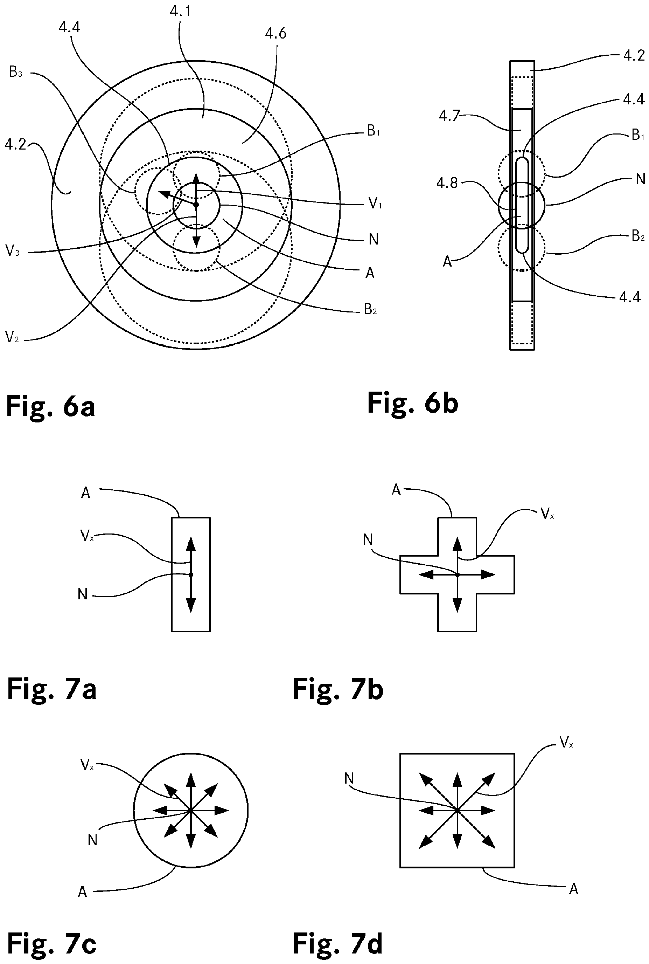

Figur 2 zeigt eine weitere Ausführungsform der erfindungsgemässen Eingabevorrichtung 1, bei welcher die Führungsvorrichtung 4 als Führungsplatte 4.1 ausgebildet ist, welche in entsprechenden Führungsschlitzen oder -schienen 4.2 einer Basisstruktur 5 der Eingabevorrichtung 1 in der Verschiebeebene V verschiebbar geführt ist. Die Führungsschlitze 4.2 können dabei derart ausgebildet sein, dass die Führungsplatte 4.1 in 2 Dimensionen verschiebbar geführt an der Basisstruktur 5 gelagert ist. Ebenso können die Führungsschlitze 4.2 derart ausgebildet sein, dass nur eine eindimensionale Verschiebbarkeit möglich ist (siehe hierzu z.B. auch Fig. 6a und 6b).

In den Führungsschlitzen 4.2 könne z.B. an der Basisstruktur 5 federelastische Elemente 4.3 angeordnet sein, welche eine Rückstellkraft auf die Führungsplatte 4.1 ausüben, derart, dass diese in eine der Neutralstellung N des Betätigungselements entsprechende Stellung zurückgestellt wird, wenn keine äusseren Kräfte wirken. Weiter kann die Führungsvorrichtung 4 einen Anschlag oder Anschläge 4.4 umfassen, welche eine Verschiebbarkeit des Betätigungselements 2 begrenzen und somit einen Betätigungsbereich A definieren (siehe z.B. Fig. 7a bis 7d). Die Anschläge 4.4 sind in der vorliegenden Ausführungsform an der Basisstruktur 5 ausgebildet, können jedoch auch von separaten Komponenten bereitgestellt werden oder an einem Gehäuse ausgebildet sein.

Die Ausführungsform der Fig. 2 umfasst weiter eine Vorspannvorrichtung 6, mit welcher das Betätigungselement 2 in seiner Längsrichtung L gegen die Steuerfläche 3.2 vorgespannt ist, sodass eine gleichmässige Anlage des Steuerabschnitts 2.3 an der Steuerfläche 3.2 sichergestellt ist. Die Vorspannvorrichtung 6 umfasst ein Federelement, vorliegend eine auf Druck wirkende Schraubenfeder 6.1, welches z.B. auf den stabförmigen Grundkörper 2.1 des Betätigungselements 2 aufgesetzt ist. Die Schraubenfeder 6.1 ist zwischen der Führungsplatte 4.1 und dem Steuerabschnitt 2.3 angeordnet und zur Steuerfläche 3.2 hin an einem am Betätigungselement 2 ausgebildeten Vorsprung 2.4 abgestützt. In entgegengesetzter Richtung ist die Schraubenfeder 6.1 an der Führungsplatte 4.1 abgestützt. Bei geeigneter Vorspannung der Schraubenfeder kann auf diese Weise erreicht werden, dass das Betätigungselement 2 in jeder Betätigungsstellung wie z.B. B_{N}, B₁ oder B₂ mit seinem Steuerabschnitt 2.3 mit einer Andruckkraft F gegen die Steuerfläche 3.2 gedrückt wird. F kann hierbei in Abhängigkeit der Betätigungsstellung betragsmässig unterschiedlich gross sein, ist aber immer in Richtung der Längsrichtung L und damit in Hubrichtung H bzw. z.B. H_{N}, H, oder H₂ gerichtet.

Figur 3 zeigt schematisch eine weitere mögliche Ausführungsform der Eingabevorrichtung 1, in welcher die Führungsvorrichtung 4 anstelle einer an der Basisstruktur 5 geführten Führungsplatte 4.1 ein elastisches Führungselement 4.5 umfasst. Das Führungselement 4.5 ist in Richtung der Verschieberichtungen V, und V₂, d.h. in Richtungen der Verschiebeebene V, an der Basisstruktur 5 abgestützt und beispielsweise an dieser befestigt. Das Führungselement 4.5 ist in Richtung der Verschiebeebene elastisch dehn- und komprimierbar, sodass es bei einer Verschiebung des Betätigungselements 2 in der Verschiebungsrichtung komprimiert wird und in entgegengesetzter Richtung gedehnt wird. Indem das Führungselement 4.5 elastisch ist, wird automatisch eine Rückstellkraft aufgebracht, welche das Betätigungselement 2 in Abwesenheit externer Kräfte in die Neutralstellung N zurücl<stellt. Das Betätigungselement 2 ist dabei am Führungselement 4.5 in seiner Längsrichtung L beweglich geführt gelagert.

Das Steuerelement der Ausführungsform der Fig. 3 ist auswechselbar in der Eingabevorrichtung 1 angeordnet. Hierzu weist das Steuerelement seitliche Führungsleisten 3.3 auf, welche in an der Basisstruktur 5 ausgebildete Führungsschienen 5.1 verschiebbar eingreifen. Das Steuerelement 3.1 kann somit in Richtung der Führungsschienen 5.1 aus der Basisstruktur 5 herausgezogen oder eingeschoben werden. Bevorzugt weisen die Führungsschienen 5.1 und die Führungsleisten 3.3 jeweils komplementäre Verrastungsmittel auf (siehe z.B. Fig. 9), sodass das Steuerelement 3.1 beim Einschieben in einer gewünschten Position verrastet.

Figur 4 zeigt schematisch eine weitere mögliche Ausführungsform der Eingabevorrichtung 1, in welcher das Steuerelement 3.1 in Hubrichtung H auslenl<bar in der Eingabevorrichtung angeordnet ist. Das Steuerelement 3.1 kann dabei über das Betätigungselement 2 in einer der Hubrichtung H entsprechenden Richtung, z.B. entgegen einer Rückstellkraft, ausgelenkt werden. Auf diese Weise kann das Betätigungselement 2 in der Neutralstellung oder in einer Betätigungsstellung wie z.B. B₁ im Sinne eines Druckknopfes in die Eingaberichtung hineingedrückt werden in die Neutralstellung N' bzw. Betätigungsstellung B₁'. Dabei wird über den Steuerabschnitt 2.3 das Steuerelement 3.1 ausgelenkt. Das Steuerelement 3.1 kann dabei nach Art von Drucktaster oder -knöpfen einen federelastischen Widerstand aufweisen, gegen welchen die Auslenkung erfolgt. Der federelastische Widerstand kann z.B. von einer Rückstellvorrichtung mit einem elastischen Element (nicht gezeigt) aufgebracht werden. Zudem kann z.B. nach Art von bekannten Druckknöpfen oder -tastern ein Schwellwert der aufzubringenden Druckkraft überwunden werden müssen, um die Auslenkung zu bewirken.

Das Steuerelement 3.1 kann z.B. mit einem elektronischen Schaltelement 7 verbunden sein, welches bei Auslenkung des Steuerelements 3.1 nach Art eines Druckknopfs oder - tasters betätigt wird (gestrichelt angedeutet). Auf diese Weise kann das Betätigungselement 2 neben der Verschiebung in der Verschiebeebene V auch als Druckknopf bzw. als Drucktaster eingesetzt werden. Indem das gesamte Steuerelement 3.1 auslenkbar angeordnet ist, kann die Auslenkung auf einfache Weise in der Neutralstellung N sowie in jeder Betätigungsstellung B₁ oder B₂ des Betätigungselements 2 bewirkt werden, wobei nur ein mit dem Steuerelement gekoppeltes Schaltelement 7 erforderlich ist. Weitere Komponenten der Eingabevorrichtung sind in Fig. 4 zugunsten eine besseren Übersichtlichkeit nicht dargestellt.

Figur 5 zeigt eine weitere Ausführungsform einer erfindungsgemässen Eingabevorrichtung 1'. Im Unterschied zur Eingabevorrichtung 1 ist ein Betätigungselement 2' nur im Wesentlichen in einer Verschiebebene V verschiebbar angeordnet, d.h. eine tatsächliche Verschiebebahn C kann geringfügig von der Verschiebeebene V abweichen. Im Gegensatz dazu liegt im Falle der Eingabevorrichtung 1 die Verschiebebahn C vollständig in der Verschiebeebene V. Als geringfügige Abweichung wird hierbei eine Abweichung einer momentanen Verschieberichtung v₁ oder v₂ aus der Verschiebeebene V verstanden, welche 15° nicht übersteigt. Im Gegensatz zu den Verschieberichtungen V₁ und V₂, welche die Richtung einer Verschiebung zum Übergang in eine Betätigungsstellung in der Verschiebeebene V bezeichnen, bezeichnen momentane Verschieberichtungen v₁ und v₂ die jeweiligen Richtungen, in welche das Betätigungselement 2' momentan verschoben wird (vorliegend exemplarisch dargestellt als v₁ und v₂ anhand der momentanen Betätigungsstellungen B, und B₂). Erfindungsgemäss stehen die momentanen Hubrichtungen wie z.B. H_{N}, H₁ oder H₂ immer senkrecht auf der momentanen Verschieberichtung v₁ und v₂.

Die Verschiebeebene V der Eingabevorrichtung 1' steht senkrecht auf der Hubrichtung H_{N} der Neutralstellung N. Die Verschiebebahn C bzw. im zweidimensionalen Fall die Verschiebefläche C folgt einer leicht gekrümmten Bahn, sodass die momentanen Verschieberichtungen, z.B. den momentanen Verschieberichtungen v₁ und v₂ in den exemplarischen Betätigungsstellungen B₁ und B₂, unter einem Winkel ungleich Null zur Verschiebeebene V stehen. Die Verschieberichtungen sind jedoch im Wesentlichen in der Verschiebebene V angeordnet, was vorliegend dahingehend zu verstehen ist, dass ein von einer momentanen Verschieberichtung mit der Verschiebeebene V eingeschlossener Winkel 15° nicht überschreitet. Bei der Verschiebung aus der Neutralstellung N in eine der exemplarischen Betätigungsstellungen B₁ oder B₂ verändert sich die momentane Verschieberichtung aufgrund der gekrümmten Verschiebebahn C kontinuierlich.

Als Referenz zur Bestimmung eines Hubes des Betätigungselements 2' kann in diesem Fall z.B. die Verschiebebahn bzw. -fläche C herangezogen werden. Die Steuerfläche 3.2' des Steuerelements 3.1' ist dabei derart ausgebildet, dass das Betätigungselement 2' in die Eingabevorrichtung 1' abgesenkt wird, wenn es aus der Neutralstellung N ausgelenkt wird. Mit anderen Worten verringert sich ein Hub h des Betätigungselements mit zunehmender Verschiebung. Um dies zu erreichen vergrössert sich ein Abstand zwischen der Steuerfläche 3.2' und der Verschiebebahn bzw. -fläche C mit zunehmendem Abstand von einer der Neutralstellung N entsprechenden Position. Die Steuerfläche 3.2' kann auch in diesem Fall als I<ugell<alotte ausgebildet sein, wobei die der Neutralstellung N entsprechende Position am Pol der I<ugell<alotte angeordnet ist.

Figur 6a zeigt eine schematische Draufsicht in Hubrichtung H auf die Eingabevorrichtung 1 zur zweidimensionalen Richtungseingabe mit einem Querschnitt, welcher der Querschnittsansicht der Fig. 2 entspricht. Insbesondere illustriert Fig. 6a die Komponenten der Führungsvorrichtung 4. Der Betätigungsbereich A ist dabei kreisförmig ausgebildet, wobei der Betätigungsbereich A beispielsweise von dem Anschlag 4.4 der Basisstruktur 5 umrandet und begrenzt ist. Entsprechend kann das Betätigungselement 2 so weit verschoben werden, bis es an den Anschlag 4.4 anstösst. Der Betätigungsbereich A ist zweidimensional in dem Sinne, dass die in der Verschiebeebene V liegende exemplarische Verschieberichtungen V₁, V₂, und V₃ schief zueinander stehen können.

In der Basisstruktur 5 (nicht dargestellt) ist der Führungsschlitz 4.2 ausgebildet, welche sich kreisringförmig um den Betätigungsbereich A erstreckt. Die Führungsplatte 4.1 ist als kreisförmige Scheibe 4.6 ausgebildet und überlappt in jeder möglichen Verschiebestellung mit dem vollständigen Betätigungsbereich A, sodass dieser in jedem Zustand vollständig von der Führungsplatte 4.1 verschlossen ist. Auf diese Weise kann durch die kreisförmige Scheibe 4.6 verhindert werden, dass z.B. Schmutz oder Staub in einen Innenraum der Eingabevorrichtung 1 eindringen kann.

In Fig. 6a sind die exemplarischen Betätigungsstellungen B₁, B₂ und B₃ gestrichelt und die Neutralstellung N durchgezogen eingezeichnet. Der kreisringförmige Führungsschlitz 4.2 ist dabei derart bemessen, dass die Führungsplatte 4.1, welche zusammen mit dem Betätigungselement 2 verschoben wird, soweit verschoben werden kann, bis das Betätigungselement 2 am Anschlag 4.4 anstösst. Dies ist z.B. in den exemplarischen Betätigungsstellungen B₂ und B₃ der Fall (für B₂ siehe z.B. auch Fig. 2). Die zu den Betätigungsstellungen B₁, B₂ und B₃ gehörenden Verschieberichtungen V₁, V₂ und V₃ liegen dabei in der Verschiebeebene V.

Figur 6b zeigt eine schematische Draufsicht in Hubrichtung H auf die Eingabevorrichtung 1 zur eindimensionalen Richtungseingabe. Die Draufsicht der Fig. 6b weist dieselbe Querschnittsansicht der Fig. 2 auf, wie auch die Ausführungsform der Fig. 6a. Allerdings ist die Führungsplatte 4.1 im Gegensatz zur kreisförmigen Scheibe 4.6 der Fig. 6a im Falle der Fig. 6b als länglicher Streifen 4.7 ausgebildet. Der Betätigungsbereich A entspricht in diesem Fall einem länglichen Schlitz 4.8, in welchem das Betätigungselement 2 aus der Neutralstellung N in nur zwei einander entgegen gerichtete Richtungen verschiebbar ist. Die Anschläge 4.4 sind hier durch die Begrenzungen an den Längsenden des Schlitzes 4.8 gebildet. Der Führungsschlitz 4.2 in der Basisstruktur 5 ist im Falle der Darstellung der Fig. 6b z.B. als längliche Schiene ausgebildet, in welcher der längliche Streifen 4.7 in die jeweilige Verschieberichtung verschiebbar geführt gelagert ist. Der Streifen 4.7, welcher zusammen mit dem Betätigungselement 2 mitbewegt wird, ist dabei derart bemessen, dass er mit dem Schlitz 4.8 in jeder Betätigungsstellung des Betätigungselements 2 vollständig überlappt.

Figuren 7a-7d zeigen schematisch verschiedene Ausbildungen des Betätigungsbereichs A, welcher durch die Menge von möglichen Betätigungsstellungen definiert ist, in welche das Betätigungselement 2 verschoben werden kann. Der Betätigungsbereich A kann jeweils von Anschlägen 4.4 begrenzt sein, welche z.B. den gesamten Umriss des Betätigungsbereich A begrenzen oder aber nur in einer der jeweiligen Verschieberichtungen Vₓ die Verschiebbarkeit des Betätigungselements 2 begrenzen.

Figur 7a zeigt einen eindimensionalen Betätigungsbereich A, in welchem die Verschieberichtungen Vₓ auf einer Geraden liegen, d.h. das Betätigungselement 2 kann aus der Neutralstellung N nur in eine erste und in eine zweite, der ersten entgegen gesetzte, Verschieberichtung Vₓ verschoben werden. Die möglichen Betätigungsstellungen können kontinuierlich in Richtung der Verschieberichtungen Vₓ im Betätigungsbereich verteilt sein oder können auch diskrete Positionen darstellen. Der Betätigungsbereich A der Fig. 7a entspricht im Wesentlichen dem Betätigungsbereich A der Darstellung der Fig. 6b.

Figur 7b zeigt einen zweidimensionalen Betätigungsbereich A, in welchem das Betätigungselement 2 aus der Neutralstellung N in zwei zueinander senkrecht stehende Richtungen Vₓ verschoben werden kann. Der Betätigungsbereich A hat somit einen kreuzförmigen Umriss. Figur 7c zeigt einen weiteren zweidimensionalen Betätigungsbereich, welcher kreisförmig ausgebildet ist. Das Betätigungselement 2 kann dabei aus der Neutralstellung N, welche im Zentrum des kreisförmigen Betätigungsbereichs angeordnet ist, in eine Vielzahl von Verschieberichtungen Vₓ in jede Richtung maximal gleich weit verschoben werden. Jeder Punkt des Betätigungsbereichs A kann dabei eine Betätigungsstellung darstellen. Der Betätigungsbereich A der Fig. 7c entspricht im Wesentlichen dem Betätigungsbereich A der Fig. 6a. Figur 7d zeigt eine quadratförmig ausgebildeten Betätigungsbereich A. Analog dem kreisförmigen Betätigungsbereich A der Fig. 7c kann das Betätigungselement 2 aus der zentral angeordneten Neutralstellung N in eine Vielzahl von Verschieberichtungen Vₓ verschoben werden. Allerdings kann das Betätigungselement 2 zu den Ecken des Umrisses hin weiter verschoben werden, als zu den Seiten hin.

Die Figuren 8a bis 8f zeigen verschiedene exemplarische Querschnittsprofile für die Ausbildung der Steuerfläche 3.2 des Steuerelements 3.1. Die dargestellten Profile können jeweils zur Steuerung einer eindimensionalen Verschiebung des Betätigungselements 2 dienen oder können z.B. rotationssymmetrisch bezüglich der Hubrichtung H in einer zentral angeordneten Neutralstellung N verstanden werden. Die Profile erstrecken sich über eine Dimension D, welche einer maximalen Dimension des Betätigungsbereichs A in der entsprechenden Verschieberichtung in der Verschiebeebene V entspricht.

Fig. 8a zeigt ein zentral abgeflachtes Teilkreis- bzw. I<ugell<alottenprofil. Eine der Neutralstellung N entsprechende Position ist dabei gegenüber dem Pol einer I<ugell<alotte abgeflacht, sodass eine absenkende Hubbewegung bei zunehmender Auslenkung verstärkt erfolgt, als in einer näheren Umgebung der Neutralstellung N. Figur 8b zeigt ein weiteres Profil, bei welchen die Randbereiche verstärkt absenkt sind, sodass im abfallenden Bereich eine vergleichsweise rasche Absenkung des Betätigungselements 2 erfolgt und bei weiterer Auslenkung eine geringe Absenkung. Figur 8c zeigt ebenfalls ein abgeflachtes Teilkreis- bzw. I<ugell<alottenprofil ähnlich der Fig. 8a. Allerdings stellt die Abflachung in der Umgebung der Neutralstellung N ein ebenes Plateau dar, womit erst in den Randbereichen erfolgt eine Absenkung erfolgt. Figur 8d entspricht weitgehend einer Gaussl<urve, sodass bei Verschiebung aus der Neutralstellung N zunächst eine rasche Absenkung erfolgt, wobei die Absenl<rate mit zunehmender Auslenkung kontinuierlich abnimmt. Figur 8e zeigt eine modifiziertes Teilkreis- bzw. I<ugell<alottenprofil, bei welchem im beriech der Neutralstellung eine lokale Vertiefung ausgebildet ist, während das Profil an den Rändern wieder ansteigt. Die lokale Vertiefung im Bereich der Neutralstellung N stellt eine Ruheposition für das Betätigungselement 2 dar, welches mit dem Steuerabschnitt 2.3 in der lokalen Vertiefung geringfügig verrasten kann. Die ansteigenden Randbereiche stellen eine Begrenzung dar, sodass ein Benutzer durch die daraus resultierende ansteigende Hubbewegung haptisches Feedback erhält, dass die Begrenzung des Betätigungsbereichs A erreicht wird. Schliesslich zeigt Fig. 8f ein Profil welches im Wesentlichen einer Doppelgaussl<urve mit zwei Maxima entspricht. Die der Neutralstellung N entsprechende Position bildet dabei ein lokales Minimum, welches zwischen den Doppelhöcl<ern der Doppelgaussl<urve angeordnet ist. Bei einer Verschiebung aus der Neutralstellung N erfolgt somit zunächst eine recht stark ansteigende Hubbewegung gefolgt von einer raschen Absenkung.

Es versteht sich, dass die Profile der Steuerfläche 3.2 beliebig ausgebildet sein können, z.B. auch individualisiert an die Bedürfnisse eins Benutzers angepasst werden können. Zudem müssen zweidimensionale Profile nicht zwingend rotationssymmetrisch ausgebildet sein, sondern können z.B. im Falle einer Eingabevorrichtung für einen Gamecontroller für "Links-Rechts" Verschiebungen ein anderes Profil aufweisen, als für "Vor-Zurück" Verschiebungen.

Figur 9 zeigt ein auswechselbares Steuerelement 3.1, wie es z.B. in der Eingabevorrichtung 1 der Fig. 3 dargestellt zur Anwendung kommen kann. Die Steuerfläche 3.2 des Steuerelements 3.1 ist als bezüglich der Hubrichtung H in der Neutralstellung N rotationssymmetrisch ausgebildete I<ugell<alotte 3.4 ausgebildet. Am Rand der I<ugell<alotte 3.4 ist ein umlaufender Flansch 3.5 mit einem z.B. quadratischen Grundriss ausgebildet. Zwei bezüglich einer vorgesehenen Einschubrichtung S seitlich gegenüberliegende Kanten des Flansches 3.5 bilden die Führungsleisten 3.3, mit welchen das Steuerelement 3.1 z.B. in die Führungsschienen 5.1 der Basisstruktur 5 eingeschoben werden kann. Am Flansch 3.5 sind Aussparungen 3.6 ausgebildet, welche als Verrastungsmittel mit entsprechend komplementär an der Basisstruktur oder an den Führungsschienen 5.1 ausgebildeten Verrastungsmitteln zusammenwirken können, sodass das Steuerelement 3.1 in den Führungsschienen 3.3 in einer gewünschten Position in der Eingabevorrichtung verrastet werden kann. Die Aussparungen können aber auch dazu dienen, das Steuerelement 3.1 in der gewünschten Position in der Eingabevorrichtung 1 zu verriegeln, z.B. durch manuelle Betätigung einer Verriegelungsvorrichtung der Eingabevorrichtung 1.

In einer der Neutralstellung N des Betätigungselements 2 entsprechenden Position am Pol der I<ugell<alotte weist die Steuerfläche 3.2 eine lokale Vertiefung in der Form einer Mulde 3.7 auf. Die Mulde 3.7 dient als Ruheposition für das Betätigungselement 2, welches mit dem Steuerabschnitt 2.3 in der Mulde 3.7 verrasten kann, wenn es in die Neutralstellung N gelangt. Weiter weisst die Steuerfläche einen ringförmig umlaufenden, oberflächenstrukturierten Bereich 3.8 auf, welcher z.B. umlaufende Rillen oder eine Riffelung aufweist (im Gegensatz zu einer ansonsten weitgehend glatten Oberfläche der Steuerfläche 3.2). Der Bereich 3.8 gibt dem Benutzer ein haptisches Feedback, wenn der Steuerabschnitt 2.3 über den Bereich 3.8 gleitet. Der ringförmige Bereich 3.8 weist dabei einen konstanten Abstand zur Neutralstellung N auf, sodass das Erreichen des Bereichs 3.8 während der Verschiebung des Betätigungselements 2 den Benutzer z.B. über eine vorgegebene oder vorgebbare Verschiebung informiert. Die vorgegebene Verschiebung kann dabei z.B. über eine Änderung der Auswertung der Verschiebung informieren, z.B. im Falle einer Anwendung bei einem Gamecontroller bei der Steuerung einer Spielfigur von "Gehen" zu "Laufen".

Figur 10 zeigt eine schematisch alternative Ausführungsform einer erfindungsgemässen Eingabevorrichtung 1", bei welcher eine Steuervorrichtung 3" stabförmige Stützen 3.1" aufweist.

An einer Basisstruktur 5", welche eine Grundplatte 5.2" umfasst, ist ein Betätigungselement 2" beweglich gelagert. Das Betätigungselement 2" weist eine quadratische Platte 2.1" auf, an welcher zentral ein Betätigungsabschnitt 2.2" in der Form einer Fingerauflage für den Finger eines Benutzers angeordnet ist. Die Platte 2.1" ist an ihren Ecken 2.5" über die vier Stützen 3.1" mit der Grundplatte 5.2" von dieser beabstandet verbunden. Die Stützen 3.1" sind dabei mit jeder Ecke 2.5" der Platte 2.1" sowie an Befestigungspunkten 5.3" an der Grundplatte 5.2" gelenkig verbunden, z.B. mittels I<ugelgelenl<en. Die Befestigungspunkte 5.2" definieren dabei einen der Platte 2.1" entsprechenden quadratischen Grundriss auf der Grundplatte 5.2". Die Platte 2.1" ist somit über die Stützen 3.1" im Sinne einer bi-direl<tionalen Parallelogrammführung beweglich an der Grundplatte 5.2" geführt gelagert. In einer Neutralstellung N" ist die Platte 2.1" mit Ihren Ecken 2.5" in senkrechter Richtung oberhalb der Befestigungspunkte 5.3" und parallel zur Grundplatte 5.2" angeordnet. Zwischen der Grundplatte 5.2" und der Platte 2.1 kann ein Federelement vorgesehen sein (nicht dargestellt), welches die Platte 2.1" mit einer Rückstellkraft von der Grundplatte 5.2" weg beaufschlagt, sodass die Platte 2.1" in Abwesenheit äusserer Kräfte in die Neutralstellung N" zurückgestellt wird.

Die Stützen 3.1" steuern dabei eine Bewegung der Platte 2.1", welche bei einer über den Betätigungsabschnitt 2.2" bewirkten Verschiebung in einer parallel zur Platte 2.1" ausgerichteten Verschiebungsebene V" von den Stützen 3.1" geführt lateral auslenkt. Dabei bleibt die Platte 2.1" aufgrund der Parallelogrammführung parallel zur Grundplatte 5.2" ausgerichtet. Das Betätigungselement 2" führt somit bei der Verschiebung in eine Betätigungsstellung, exemplarisch in Fig. 10 die gestrichelt angedeuteten Betätigungsstellungen B₁" und B₂", eine rein translatorische Bewegung aus.

Aufgrund der von der Steuervorrichtung 3" bereitgestellten Parallelogrammführung verringert sich bei einer lateralen Auslenkung auch ein Abstand der Platte 2.1" von der Grundplatte 5.2". Entsprechend wird das Betätigungselement 2" bei einer Verschiebung in der Verschiebeebene V" zur Grundplatte 5.2" hin abgesenkt. Die so erreichte Steuerung des Betätigungselements 2" bewirkt eine Hubbewegung in Richtung einer Hubrichtung H", welche senkrechtauf der Verschiebebene V" sowie auf der Grundplatte 5.2" und der Platte 2.1" steht. Indem die Stützen 3.1" steif sind, stellt die Steuervorrichtung 3" eine Zwangskopplung der Hubbewegung mit der Verschiebebewegung in der Verschiebeebene V" des Betätigungselements 2" bereit.

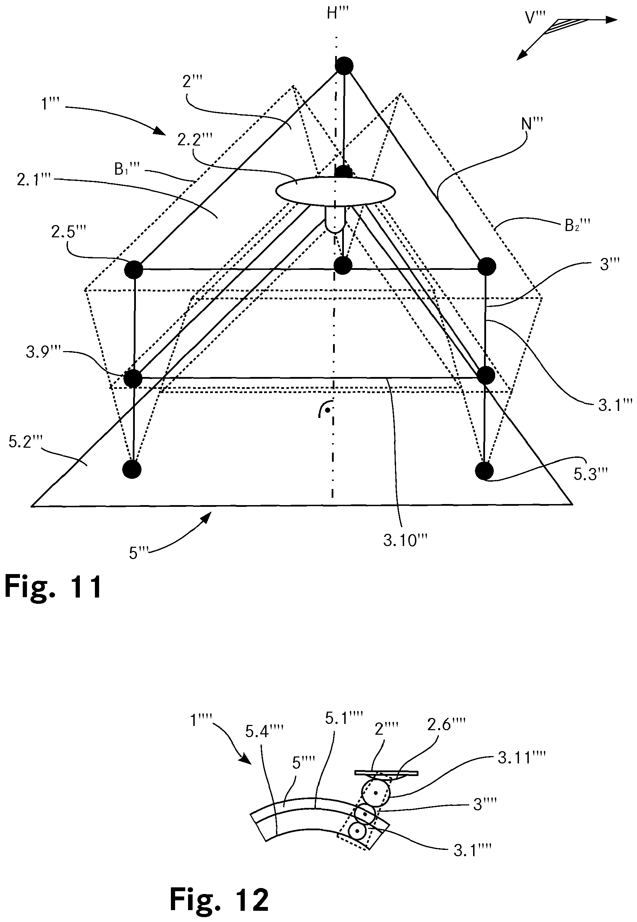

Figur 11 zeigt eine weitere schematisch alternative Ausführungsform einer erfindungsgemässen Eingabevorrichtung 1"', bei welcher eine Steuervorrichtung 3‴ drei stabförmige Stützen 3.1‴ aufweist.

An einer Basisstruktur 5"', welche eine Grundplatte 5.2‴ umfasst, ist ein Betätigungselement 2‴ beweglich gelagert. Das Betätigungselement 2‴ weist eine dreieckige Platte 2.1‴ auf, an welcher zentral ein Betätigungsabschnitt 2.2‴ in der Form einer Fingerauflage für den Finger eines Benutzers angeordnet ist. Die Platte 2.1‴ ist an ihren Ecken 2.5‴ über die drei Stützen 3.1‴ mit der Grundplatte 5.2‴ von dieser beabstandet verbunden. Die Stützen 3.1‴ sind dabei je mit einer Ecke 2.5‴ der Platte 2.1‴ sowie je an einem Befestigungspunkt 5.3‴ mit der Grundplatte 5.2‴ gelenkig verbunden, z.B. mittels I<ugelgelenl<en. Die Befestigungspunkte 5.3‴ definieren dabei einen der Platte 2.1‴ entsprechenden dreieckigen Grundriss auf der Grundplatte 5.2‴. Die Stützen 3.1‴ sind zudem in ihrem Mittelbereich an Gelenkpunkten 3.9‴ über Verstrebungen 3.10‴ miteinander verbunden. Die Platte 2.1‴ ist somit über die Stützen 3.1‴ im Sinne einer bidirektionalen Parallelogrammführung beweglich an der Grundplatte 5.2‴ geführt gelagert. Die Verstrebungen 3.10‴ verhindern dabei ein Verdrehen der Platte 2.1‴ gegenüber der Grundplatte 5.2‴. In einer Neutralstellung N‴ ist die Platte 2.1‴ mit ihren Ecken 2.5‴ in senkrechter Richtung oberhalb der Befestigungspunkte 5.3‴ und parallel zur Grundplatte 5.2‴ angeordnet. Zwischen der Grundplatte 5.2‴ und der Platte 2.1‴ kann ein Federelement vorgesehen sein (nicht dargestellt), welches die Platte 2.1‴ mit einer Rückstellkraft von der Grundplatte 5.2‴ weg beaufschlagt, sodass die Platte 2.1‴ in Abwesenheit äusserer Kräfte in die Neutralstellung N‴ zurückgestellt wird.

Die Stützen 3.1‴ steuern eine Bewegung der Platte 2.1‴, welche bei einer über den Betätigungsabschnitt 2.2‴ bewirkten Verschiebung in einer parallel zur Platte 2.1‴ ausgerichteten Verschiebungsebene V‴ von den Stützen 3.1‴ geführt lateral auslenkt. Dabei bleibt die Platte 2.1‴ aufgrund der Parallelogrammführung parallel zur Grundplatte 5.2‴ ausgerichtet. Das Betätigungselement 2‴ führt somit bei der Verschiebung in eine Betätigungsstellung, exemplarisch in Fig. 11 die gestrichelt angedeuteten Betätigungsstellungen B₁‴ und B₂‴, eine rein translatorische Bewegung aus.

Aufgrund der von der Steuervorrichtung 3‴ bereitgestellten Parallelogrammführung verringert sich bei einer lateralen Auslenkung auch ein Abstand der Platte 2.1‴ von der Grundplatte 5.2"'. Entsprechend wird das Betätigungselement 2‴ bei einer Verschiebung in der Verschiebeebene V‴ zur Grundplatte 5.2‴ hin abgesenkt. Die so erreichte Steuerung des Betätigungselements 2‴ bewirkt eine Hubbewegung in Richtung einer Hubrichtung H"', welche senkrecht auf der Verschiebebene V‴ sowie auf der Grundplatte 5.2‴ und der Platte 2.1‴ steht. Indem die Stützen 3.1‴ steif sind, stellt die Steuervorrichtung 3‴ eine Zwangskopplung der Hubbewegung mit der Verschiebebewegung in der Verschiebeebene V" des Betätigungselements 2‴ bereit.

Die in Figur 11 gezeigte Eingabevorrichtung 1‴ kann auch durch eine Modifikation eines bestehenden Gamecontrollers hergestellt werden. Hierzu kann ein Steuerhebel des bestehenden Gamecontrollers als eine der Stützen 3.1‴ verwendet werden. In diesem Fall sind einzig die beiden weiteren Stützen 3.1‴ sowie das Betätigungselement 2‴ und die Verstrebungen 3.10‴ zu ergänzen. Hierzu sind am bestehenden Gamecontroller am Steuerhebel oben die entsprechende gelenkige Verbindung in einer der Ecken 2.5‴ des Betätigungselements 2‴ und mittig die gelenkigen Verbindungen des Gelenkpunkts 3.9‴ anzubringen. Ausserdem sind neben dem Steuerhebel zwei gelenkige Verbindungen für die Befestigungspunkte 5.3‴ der beiden weiteren Stützen 3.1‴ am Gamekontroller anzubringen.

Figur 12 zeigt eine weitere schematisch alternative Ausführungsform einer erfindungsgemässen Eingabevorrichtung 1ʺʺ, bei welcher eine Steuervorrichtung 3ʺʺ eine einzige stabförmige Stütze 3.1ʺʺ aufweist. In Figur 12 ist diese Stütze 3.1ʺʺ mit gestrichelten Linie dargestellt.

An einer Basisstruktur 5ʺʺ, welche eine bogenförmige Führungsschiene 5.1ʺʺ umfasst, ist über die Steuervorrichtung 3ʺʺ ein Betätigungselement 2ʺʺ beweglich gelagert. Dabei ist die Stütze 3.1ʺʺ an ihrem unteren Ende entlang der Führungsschiene 5.1ʺʺ verschiebbar an der Basisstruktur 5ʺʺ verschiebbar gelagert. Da die Führungsschiene 5.1ʺʺ bogenförmig ist, wird die Stütze 3.1ʺʺ beim Verschieben entlang der Führungsschiene 5.1ʺʺ bogenförmig nach oben und wieder nach unten bewegt und zugleich auch in ihrer nach oben ausgerichteten Ausrichtung verschwenkt. Am oberen Ende der Stütze 3.1ʺʺ ist das Betätigungselement 2ʺʺ schwenkbar gelagert. In der Stütze 3.1ʺʺ sind ausserdem drei Laufräder 3.11‴ um ihre jeweilige Achse drehbar gelagert. Das zuunterst in der Stütze 3.1ʺʺ angeordnete Laufrad 3.11ʺʺ läuft mit seiner Lauffläche über eine an der Basisstruktur 5ʺʺ angeordnete Lauffläche 5.4ʺʺ. Dadurch wird das unterste Laufrad 3.11ʺʺ um seine Achse gedreht, wenn die Stütze 3.1ʺʺ entlang der Führungsschiene 5.1ʺʺ verschoben wird. Das mittlere der drei Laufräder 3.11ʺʺ läuft mit seiner Lauffläche auf der Lauffläche des untersten Laufrads 3.11ʺʺ, während das oberste der drei Laufräder 3.11ʺʺ mit seiner Lauffläche auf der Lauffläche des mittleren Laufrads 3.11ʺʺ läuft. Dadurch werden alle drei Laufräder 3.11ʺʺ um ihre Achsen gedreht, wenn die Stütze 3.1ʺʺ entlang der Führungsschiene 5.1ʺʺ verschoben wird.

Weiter weist das Betätigungselement 2ʺʺ auf seiner Unterseite eine Lauffläche 2.6ʺʺ auf, welche auf der Lauffläche des obersten der drei Laufräder 3.11ʺʺ läuft. Dadurch wird eine Orientierung des Betätigungselements 2ʺʺ relativ zur Stütze 3.1ʺʺ verändert, wenn die Stütze 3.1ʺʺ entlang der Führungsschiene 5.1ʺʺ bewegt wird. Durch eine geeignete Wahl der Radien der drei Laufräder 3.11ʺʺ kann somit die Schwenkbewegung der Stütze 3.1ʺʺ, welche beim Bewegen der Stütze 3.1ʺʺ entlang der Führungsschiene 5.1ʺʺ erfolgt, ausgeglichen werden, sodass das Betätigungselement 2ʺʺ immer gleich im Raum ausgerichtet bleibt, wenn das Betätigungselement 2ʺʺ verschoben wird und die durch die Steuervorrichtung 3ʺʺ gesteuerte Hubbewegung nach oben und wieder nach unten durchführt, wenn die Stütze 3.1ʺʺ entlang der Führungsschiene 5.1ʺʺ bewegt wird. Genauso kann durch eine geeignete Wahl der Radien der drei Laufräder 3.11ʺʺ aber auch eine kontrollierte Schwenkbewegung des Betätigungselements 2ʺʺ verursacht werden, wenn die Stütze 3.1ʺʺ entlang der Führungsschiene 5.1ʺʺ bewegt wird. So kann das Betätigungselement 2ʺʺ beispielsweise auch eine im Vergleich zur Schwenkbewegung der Stützte 3.1ʺʺ gegenläufige Schwenkbewegung durchführen.

In einer Variante der in Figur 12 gezeigten Eingabevorrichtung 1ʺʺ, sind die drei Laufräder 3.11ʺʺ Zahnräder. In dieser Variante sind die an der Basisstruktur 5ʺʺ angeordnete Lauffläche 5.4ʺʺ sowie die auf der Unterseite des Betätigungselements 2ʺʺ angeordnete Lauffläche 2.6ʺʺ je gezahnt, um in das unterste bzw. das oberste der drei als Zahnräder ausgebildeten Laufräder 3.11ʺʺ einzugreifen.

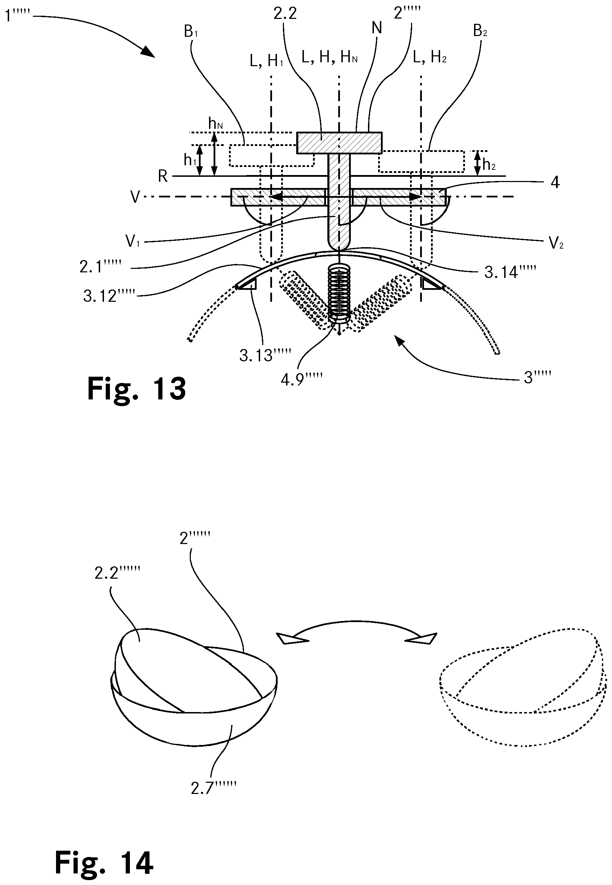

Figur 13 zeigt eine weitere schematisch alternative Ausführungsform einer erfindungsgemässen Eingabevorrichtung 1‴". Diese Eingabevorrichtung 1‴" ist zu grössten Teilen identisch zur in Figur 1 gezeigten Eingabevorrichtung 1. Daher weisen zur in Figur 13 gezeigten Elemente der Eingabevorrichtung 1‴", welche identisch zu den entsprechenden Elemente der in Figur 1 gezeigten Eingabevorrichtung 1 sind, die gleichen Bezugszeichen auf.

Im Gegensatz zur in Figur 1 gezeigten Eingabevorrichtung 1 weist die in der Figur 13 gezeigte Eingabevorrichtung 1‴" keinen Steuerabschnitt 2.3 des Betätigungselements 2 auf, welcher an einer Steuerfläche 3.2 eines Steuerelements 3.1 einer Steuervorrichtung 3 der Eingabevorrichtung 1 anliegt. Vielmehr ist in der in Figur 13 gezeigten Eingabevorrichtung 1‴" am in Längsrichtung L gegenüberliegenden Längsende des Grundkörpers 2.1‴" des Betätigungselements 2‴", welches in die Eingabevorrichtung 1""' hineinragt, der Grundkörper 2.1‴" mit einem I<ugelgelenl< 3.14‴" an der nach oben gerichteten Aussenseite einer I<ugelschalenabschnittsförmigen Steuerschale 3.12‴" der Steuervorrichtung 3‴" gelagert. Diese Steuerschale 3.12‴" ist auf einem horizontal ausgerichteten Stützring 3.13‴" der Steuervorrichtung 3‴" liegend gelagert. Wenn somit das Betätigungselement 2‴" in der Führungsvorrichtung 4 in der Verschiebeebene V verschoben wird, dann wird die Steuerschale 3.12‴" durch das Betätigungselement 2‴" über dem Stützring 3.13‴" verschoben und verkippt. Dadurch wird auch das I<ugelgelenl< 3.14‴" mit der Steuerschale 3.12‴" mitbewegt und das Betätigungselement 2‴" in die Hubrichtung längs der Längsachse L bewegt.

An der Innenseite der Steuerschale 3.12‴' ist ein erstes Ende einer Spiralfeder 4.9‴" angeordnet, deren zweites Ende an der gleichen Einheit wie der Stützring 3.13‴" befestigt ist. Diese Spiralfeder 4.9‴" übt eine Rückstellkraft auf die Steuerschale 3.12‴" aus, derart, dass diese in eine der Neutralstellung N des Betätigungselements 2‴" entsprechende Stellung zurückgestellt wird, wenn keine äusseren Kräfte wirl<en.Die Figur 14 zeigt ein Betätigungselement 2‴‴, welches in einer erfindungsgemässen Eingabevorrichtung wie beispielsweise den vorgehend beschriebenen Eingabevorrichtungen eingesetzt werden kann. Dieses Betätigungselement 2‴‴ weist einen Betätigungsabschnitt 2.2‴‴ auf, welcher in einer Schale 2.7‴‴ verschwenkbar gelagert ist. Dabei ist die Schwenkbewegung des Betätigungsabschnitts 2.2‴‴ nicht angetrieben und auch nicht zwangsgesteuert. Vielmehr ist der Betätigungsabschnitt 2.2‴‴ frei um wenigstens eine geometrische Achse schwenkbar am restlichen Betätigungselement 2‴‴, im vorliegenden Fall an der Schale 2.7""", gelagert. Dabei kann die geometrische Schwenkachse relativ zum restlichen Betätigungselement 2‴‴ statisch, d.h. fest, angeordnet sein, oder kann auch während einer Schwenkbewegung des Betätigungsabschnitts 2.2‴‴ relativ zum restlichen Betätigungselement 2‴‴ relativ zum restlichen Betätigungselement 2‴‴ verschoben werden.

Wenn der Betätigungsabschnitt 2.2‴‴ daher durch einen Benutzer mit dem Finger berührt wird, um das Betätigungselement 2‴‴ zu verschieben und entlang der Hubrichtung zu bewegen, kann der Betätigungsabschnitt 2.2‴‴ eine Schwenkbewegung durchführen, womit sich seine Ausrichtung zum Finger des Benutzers anpassen kann. Dabei befindet sich die geometrische Schwenkachse vorzugsweise möglichst nahe an demjenigen Punkt, an welchem der Betätigungsabschnitt 2.2‴‴ bei der Betätigung durch den Benutzer eine Krafteinwirkung durch den Finger des Benutzers erfährt. Dadurch wird eine optimale Kraftübertragung vom Benutzer auf das Betätigungselement 2‴‴ ermöglicht. Weiter ist die geometrische Schwenkachse vorzugsweise vom Punkt der Krafteinwirkung durch den Finger auf den Betätigungsabschnitt 2.2‴‴ gesehen auf der Seite des Fingers des Benutzers und nicht auf der Seite des Betätigungselements 2‴‴ angeordnet. Damit wird erreicht, dass der Betätigungsabschnitt 2.2‴‴ bei der Betätigung durch den Benutzer während der Bewegung des Betätigungselements 2‴‴ mitschwingt und seine Ausrichtung zum Finger des Benutzers anpasst anstatt bei einer Krafteinwirkung wegzul<ippen.

Wie bereits erwähnt, ist im in Figur 14 gezeigten Beispiel der Betätigungsabschnitt 2.2‴‴ in der Schale 2.7‴‴ um die geometrische Schwenkachse verschwenkbar gelagert. Hierzu sind verschiedene mechanische Varianten möglich. In einer ersten Variante ist die geometrische Schwenkachse eine physische Achse, welche auf der Innenseite der Schale 2.7‴‴ an der Schale 2.7‴‴ angeordnet ist und an welcher der Betätigungsabschnitt 2.2‴‴ verschwenkbar gelagert ist. In einer zweiten Variante weist die Schale 2.7‴‴ auf ihrer Innenseite eine Schiene auf, welche eine bogenförmige Bahn um die geometrische Schwenkachse bildet, wobei der Betätigungsabschnitt 2.2‴‴ auf dieser Schiene verschiebbar gelagert ist und dadurch um die geometrische Schwenkachse verschwenkbar gelagert ist. In diesem Fall kann die Schale 2.7‴‴ beispielsweise etwas mehr als eine Halbkugelschale bilden, sodass der Betätigungsabschnitt 2.2‴‴ im Inneren der Schale 2.7‴‴ gehalten ist. Genauso kann die Schiene aber auch im Querschnitt ein T-Profil aufweisen, wobei der Betätigungsabschnitt 2.2‴‴ die lateralen Überstände der Schiene hintergreift und dadurch an der Schale 2.7‴‴ gehalten ist. In diesem Fall kann die Schale 2.7‴‴ auch ein kleineres Segment einer Kugelschale als eine Halbkugelschale bilden.

Sowohl eine Lagerung mittels einer physischen Schwenkachse als auch Lagerung durch eine Schiene ermöglichen jeweils nur eine Schwenkbewegung des Betätigungsabschnitts 2.2‴‴ in eine Richtung. In weiteren Varianten ist er Betätigungsabschnitt 2.2‴‴ um zwei verschiedene, zueinander angewinkelte geometrische Schwenkachsen schwenkbar am restlichen Betätigungselement 2‴‴ bzw. der Schale 2.7‴‴ verschwenkbar gelagert. In diesen weiteren Varianten ist der Betätigungsabschnitt 2.2‴‴ in zwei Richtungen schwenkbar. Hierzu kann beispielsweise zwischen der Schale 2.7‴‴ und dem Betätigungsabschnitt 2.2‴‴ eine Zwischenschale angeordnet sein. In einem Beispiel ist diese Zwischenschale wie vorgehend beschrieben mittels einer physischen Schwenkachse oder mittels einer Schiene um eine erste geometrische Schwenkachse an der Schale 2.7‴‴ verschwenkbar gelagert und der Betätigungsabschnitt 2.2‴‴ mittels einer physischen Schwenkachse oder einer Schiene um eine zweite geometrische Schwenkachse an der Zwischenschale verschwenkbar gelagert, wobei die erste geometrische Schwenkachse in einem Winkel wie beispielsweise einem rechten Winkel zur zweiten geometrischen Schwenkachse ausgerichtet ist.

Allgemein ist festzuhalten, dass die Basisstrul<turen 5 bzw. 5" wie vorliegend beschrieben auf verschiedene Weise wie z.B. in der Form eines Rahmens, einer Grundplatte oder eines Gehäuses bereitgestellt sein können.Ebenso versteht es sich, dass die Komponenten der Eingabevorrichtung 1, 1' oder 1" ganz oder teilweise an der Basisstruktur 5 bzw. 5" ausgebildet sein können oder aber auch als eigenständige Komponenten an dieser befestigt bzw. mit dieser verbunden sein können.Beispielsweise kann der Führungsschlitz 4.2 in einer Schiene ausgebildet sein, welche an der Basisstruktur befestigt ist. Ähnlich können auch der oder die Anschläge 4.4 als separate Teile wie z.B. als ein den Betätigungsbereich A begrenzender Kragen ausgebildet sein, welcher an der Basisstruktur 5 befestigt ist bzw. mit dieser verbunden ist. Schliesslich muss das Betätigungselement 2 keinen länglichen Grundkörper 2.1 aufweisen sondern kann auch als flacher Schieber ausgebildet sein, welcher beim Verschieben eine von der Steuerungsvorrichtung gesteuerte Hubbewegung ausführt. Die vorliegend beschriebenen Ausführungsformen stellen somit einzig eine schematische Illustration des erfinderischen Grundgedankens dar und verstehen sich nicht in konstruktiv einschränkender Weise.

Zusammenfassend ist festzustellen, dass Eingabevorrichtung für eine elektronisches Gerät, insbesondere einen Gamecontroller, bereitzustellen, welche auf konstruktiv einfache Weise eine ergonomische und komfortable Betätigung bzw. Bedienung durch einen Benutzer erlaubt. Durch die von der Steuervorrichtung gesteuerte Hubbewegung bei einem im Wesentlichen translatorischen Verschieben des Betätigungselements wird ein Bewegungsprofil des Betätigungselements erreicht, welches auch bei längerer Benutzung z.B. die Fingergelenke eines Benutzers schont. Zudem erlaubt das so gesteuerte Hubprofil dem Benutzer in Abhängigkeit einer Verschiebung aus einer Neutralstellung ein haptisches Feedback z.B. beim Erreichen von ausgezeichneten Positionen zu geben.

## Patentansprüche

1. Eingabevorrichtung (1, 1‴, 1ʺʺ, 1‴ʺ, 1‴‴), insbesondere für ein elektronisches Gerät, vorzugsweise für einen Gamecontroller, umfassend
a) ein Betätigungselement (2, 2‴, 2ʺʺ, 2‴ʺ, 2‴‴) zur Betätigung der Eingabevorrichtung (1, 1‴, 1ʺʺ, 1‴ʺ, 1‴‴) durch einen Benutzer mit einem von ausserhalb der Eingabevorrichtung (1, 1‴, 1ʺʺ, 1‴ʺ, 1‴‴) zugänglichen Betätigungsabschnitt (2.2, 2.2", 2.2‴, 2.2‴‴), wobei
b) das Betätigungselement (2, 2‴, 2‴', 2‴", 2‴‴) vom Benutzer in mehrere, einen Betätigungsbereich (A) definierende Betätigungsstellungen (B1, B2, B3, B1", B2") bringbar ist, wobei
c) das Betätigungselement (2, 2‴, 2‴', 2‴", 2‴‴) durch Verschieben in eine oder mehrere, insbesondere im Wesentlichen in einer Verschiebeebene (V, V", V‴) liegende, Verschieberichtungen (V1, V2, V3) in die Betätigungsstellungen (B1, B2, B3, B1", B2") verschiebbar ist und
d) elektronische Positionserfassungsmittel vorhanden sind, welche direkt oder indirekt eine momentane Betätigungsstellung (B1, B2, B3, B1", B2") des Betätigungselements (2, 2‴, 2ʺʺ, 2‴", 2‴‴) erfassen,
die Eingabevorrichtung **dadurch gekennzeichnet, dass**
e) das Betätigungselement (2, 2‴, 2ʺʺ, 2‴ʺ, 2‴‴) in einer zu einer jeweils momentanen Verschieberichtung (v1, v2) senkrechtausgerichteten momentanen Hubrichtung (HN, H1, H2, H3) beweglich in der Eingabevorrichtung (1, 1‴, 1"", 1‴", 1‴‴) geführt ist, und
f) eine Steuerungsvorrichtung (3, 3", 3‴, 3ʺʺ, 3‴ʺ) vorhanden ist, mit welcher bei einer Verschiebung des Betätigungselements (2, 2‴, 2ʺʺ, 2‴ʺ, 2‴‴) im Betätigungsbereich (A) in die eine oder mehreren Verschieberichtungen eine Hubbewegung des Betätigungselements (2, 2‴, 2ʺʺ, 2‴ʺ, 2‴‴) in der momentanen Hubrichtung (HN, H1, H2, H3) in Abhängigkeit der Verschiebung des Betätigungselements (2, 2‴, 2ʺʺ, 2‴ʺ, 2‴‴) steuerbar bzw. gesteuert ist,
wobei durch die Steuervorrichtung (3, 3", 3‴, 3ʺʺ, 3‴ʺ) ein Hubprofil eines Punktes des Betätigungselements (2, 2‴, 2ʺʺ, 2‴ʺ, 2‴‴) bestimmt ist, wobei das Hubprofil eine Bahn bezeichnet, welche der Punkt des Betätigungselements (2, 2‴, 2ʺʺ, 2ʺʺ′, 2‴‴) bei überlagerter Hubbewegung und Verschiebung ausführt.

2. Eingabevorrichtung (1, 1‴, 1ʺʺ, 1ʺʺ′, 1‴‴) nach Anspruch 1, **dadurch gekennzeichnet, dass** sämtliche momentanen Verschieberichtungen (v1, v2) strikt in der Verschiebeebene (V, V", V‴) liegen und die momentanen Hubrichtungen (HN, H1, H2, H3) somit in jeder Betätigungsstellung des Betätigungselements (2, 2‴, 2ʺʺ, 2ʺʺ′, 2‴‴) senkrecht auf der Verschiebeebene (V, V", V‴) stehen und längs einer gemeinsamen Hubrichtung ausgerichtet sind.

3. Eingabevorrichtung (1, 1‴, 1ʺʺ, 1ʺʺ′, 1‴‴) nach Anspruch 1 oder 2, **dadurch gekennzeichnet, dass** das Betätigungselement (2, 2‴, 2ʺʺ, 2ʺʺ′, 2‴‴) in der Eingabevorrichtung (1, 1‴, 1ʺʺ, 1ʺʺ′, 1‴‴) über eine Führungsvorrichtung in die eine oder mehreren Verschieberichtungen (V1, V2, V3) verschiebbar und in der jeweils momentanen Hubrichtung (HN, H1, H2, H3) beweglich geführt gelagert ist.

4. Eingabevorrichtung (1, 1‴, 1ʺʺ, 1ʺʺ′, 1‴‴) nach Anspruch 1 oder 2, **dadurch gekennzeichnet, dass** das Betätigungselement (2, 2‴, 2ʺʺ, 2ʺʺ′, 2‴‴) in der Eingabevorrichtung (1, 1‴, 1ʺʺ, 1ʺʺ′, 1‴‴) über ein elastisches Element (4.3) in die eine oder mehreren Verschieberichtungen (V1, V2, V3) verschiebbar und in der jeweils momentanen Hubrichtung (HN, H1, H2, H3) beweglich gelagert ist.

5. Eingabevorrichtung (1, 1‴, 1ʺʺ, 1ʺʺ′, 1‴‴) nach einem der Ansprüche 1 bis 4, **dadurch gekennzeichnet, dass** eine der Betätigungsstellungen (B1, B2, B3, B1", B2") eine Neutralstellung (N, N", N‴) ist, in welcher das Betätigungselement (2, 2‴, 2ʺʺ, 2ʺʺ′, 2‴‴) in Abwesenheit einer Betätigung angeordnet ist.

6. Eingabevorrichtung (1, 1‴, 1ʺʺ, 1ʺʺ′, 1‴‴) nach einem der Ansprüche 1 bis 5, **dadurch gekennzeichnet, dass** der Betätigungsbereich (A) kreisförmig ausgebildet ist, wobei gegebenenfalls die Neutralstellung (N, N", N‴) im Mittelpunkt des kreisförmigen Betätigungsbereichs (A) angeordnet ist.

7. Eingabevorrichtung (1, 1‴, 1ʺʺ, 1ʺʺ′, 1‴‴) nach einem der Ansprüche 1 bis 6, **dadurch gekennzeichnet, dass** die Steuervorrichtung (3, 3", 3‴, 3ʺʺ, 3ʺʺ′) derart ausgebildet ist, dass das Betätigungselement (2, 2‴, 2ʺʺ, 2ʺʺ′, 2‴‴) in der jeweils momentanen Hubrichtung (HN, H1, H2, H3) zumindest teilweise in die Eingabevorrichtung (1, 1‴, 1ʺʺ, 1ʺʺ′, 1‴‴) absenkbar ist bzw. abgesenkt wird, wenn es, insbesondere gegebenenfalls aus der Neutralstellung (N, N", N‴), in die eine oder mehreren Verschieberichtungen (V1, V2, V3) verschoben wird.

8. Eingabevorrichtung (1, 1‴, 1ʺʺ, 1ʺʺ′, 1‴‴) nach einem der Ansprüche 1 bis 7, **dadurch gekennzeichnet, dass** die Steuervorrichtung (3, 3", 3‴, 3ʺʺ, 3ʺʺ′) derart ausgebildet ist und mit dem Betätigungselement (2, 2‴, 2ʺʺ, 2ʺʺ′, 2‴‴) zusammenwirkt, dass eine Zwangssteuerung der Hubbewegung in Abhängigkeit der Verschiebung des Betätigungselements (2, 2‴, 2ʺʺ, 2ʺʺ′, 2‴‴) in die eine oder mehreren Verschieberichtungen (V1, V2, V3) vorliegt.

9. Eingabevorrichtung (1, 1‴, 1ʺʺ, 1ʺʺ′, 1‴‴) nach einem der Ansprüche 1 bis 8, **dadurch gekennzeichnet, dass** die Steuervorrichtung (3, 3", 3‴, 3ʺʺ, 3ʺʺ′) ein Steuerelement (3.1, 3.1", 3.1‴, 3.1ʺʺ) mit einer Steuerfläche (3.2) umfasst und das Betätigungselement (2, 2‴, 2ʺʺ, 2ʺʺ′, 2‴‴) einen Steuerabschnitt (2.3) zum Zusammenwirken mit der Steuerfläche (3.2) aufweist, wobei die Steuerfläche (3.2) derart ausgebildet und bezüglich des Betätigungselements (2, 2‴, 2ʺʺ, 2ʺʺ′, 2‴‴) angeordnet ist, dass beim Verschieben des Betätigungselements (2, 2‴, 2ʺʺ, 2ʺʺ′, 2‴‴) in die eine oder mehreren Verschieberichtungen (V1, V2, V3) durch Zusammenwirken des Steuerabschnitts (2.3) mit der Steuerfläche (3.2) die Hubbewegung des Betätigungselements (V1, V2, V3) in der jeweils momentanen Hubrichtung (HN, H1, H2, H3) steuerbar bzw. gesteuert ist.

10. Eingabevorrichtung (1, 1‴, 1ʺʺ, 1ʺʺ′, 1‴‴) nach einem Anspruch 9, **dadurch gekennzeichnet, dass** das Steuerelement (3.1, 3.1", 3.1‴, 3.1ʺʺ) von einem Benutzer auswechselbar in der Eingabevorrichtung (1, 1‴, 1ʺʺ, 1ʺʺ′, 1‴‴) angeordnet ist, sodass verschiedene Steuerelemente (3.1, 3.1", 3.1‴, 3.1ʺʺ) mit unterschiedlichen Steuerflächen (3.2) in die Eingabevorrichtung (1, 1‴, 1ʺʺ, 1ʺʺ′, 1‴‴) eingesetzt werden können.

11. Eingabevorrichtung (1, 1‴, 1ʺʺ, 1ʺʺ′, 1‴‴) nach Anspruch 10, **dadurch gekennzeichnet, dass** das Steuerelement (3.1, 3.1", 3.1‴, 3.1ʺʺ) eine, insbesondere gekrümmte, Steuerfläche (3.2) zur Anlage eines Steuerabschnitts (2.3) eines Betätigungselements (2, 2‴, 2ʺʺ, 2ʺʺ′, 2‴‴) der Eingabevorrichtung (1, 1‴, 1ʺʺ, 1ʺʺ′, 1‴‴) aufweist.

12. Elektronisches Gerät, insbesondere ein mobiles elektronisches Gerät, mit einer Eingabevorrichtung (1, 1‴, 1ʺʺ, 1ʺʺ′, 1‴‴) gemäss einem der Ansprüche 1 bis 10.

13. Elektronisches Gerät gemäss vorstehendem Anspruch, **dadurch gekennzeichnet, dass** es ein Gamecontroller ist.

14. Elektronisches Gerät gemäss einem der beiden vorstehenden Ansprüche zur Installation in einem Fahrzeug, insbesondere in einem Automobil.

## Claims

1. An input device (1, 1‴, 1"", 1ʺʺ′, 1"""), in particular for an electronic unit, preferably for a game controller, comprising
a) an actuation element (2, 2‴, 2ʺʺ, 2ʺʺ′, 2‴‴) for the actuation of the input device (1, 1‴, 1"", 1ʺʺ′, 1‴‴) by a user, having an actuation section (2.2, 2.2", 2.2‴, 2.2""") accessible from outside the input device (1, 1‴, 1"", 1ʺʺ′, 1"""), wherein
b) the actuation element (2, 2‴, 2"", 2ʺʺ′, 2""") can be brought into multiple actuation positions (B1, B2, B3, B1", B2"), which define an actuation range (A), by the user, wherein
c) the actuation element (2, 2"', 2"", 2""', 2‴‴) can be displaced into the actuation positions (B1, B2, B3, B1", B2") by displacement in one or more displacement directions (V1, V2, V3), which in particular lie substantially in a displacement plane (V, V", V‴), and
d) electronic position detection means are provided which directly or indirectly detect an instantaneous actuation position (B1, B2, B3, B1", B2") of the actuation element (2, 2‴, 2ʺʺ, 2ʺʺ′, 2"""),
the input device being **characterized in that**
e) the actuation element (2, 2‴, 2"", 2ʺʺ′, 2‴‴) is guided, movably in an instantaneous stroke direction (HN, H1, H2, H3) that is oriented perpendicular to a respectively instantaneous displacement direction (v1, v2), in the input device (1, 1‴, 1"", 1ʺʺ′ 1‴‴), and
f) a control device (3, 3", 3‴, 3ʺʺ, 3ʺʺ′) is provided, by means of which, during a displacement of the actuation element (2, 2‴, 2ʺʺ, 2ʺʺ′, 2""") in the actuation range (A) in the one or more displacement directions, a stroke movement of the actuation element (2, 2‴, 2ʺʺ, 2ʺʺ′, 2""") in the instantaneous stroke direction (HN, H1, H2, H3) is controllable or controlled in a manner dependent on the displacement of the actuation element (2, 2‴, 2"", 2ʺʺ′, 2"""),
wherein the control device (3, 3", 3‴, 3"", 3ʺʺ′) determines a stroke profile of a point of the actuating element (2, 2‴, 2"", 2ʺʺ′, 2"""), the stroke profile referring to a path which the point of the actuating element (2, 2‴, 2"", 2ʺʺ′, 2""") moves along in a case of a superposed stroke movement and displacement.

2. The input device (1, 1‴, 1"", 1ʺʺ′, 1""") as claimed in claim 1, **characterized in that** all instantaneous displacement directions (v1, v2) lie strictly in the displacement plane (V, V", V‴), and the instantaneous stroke directions (HN, H1, H2, H3) are thus perpendicular to the displacement plane (V, V", V‴), and oriented along a common stroke direction, in every actuation position of the actuation element (2, 2‴, 2ʺʺ, 2ʺʺ′, 2‴‴).

3. The input device (1, 1‴, 1"", 1""', 1‴‴) as claimed in claim 1 or 2, **characterized in that** the actuation element (2, 2‴, 2ʺʺ, 2ʺʺ′, 2‴‴) is mounted in the input device (1, 1‴, 1"", 1ʺʺ′, 1"""), so as to be guided displaceably in the one or more displacement directions (V1, V2, V3) and movably in the respectively instantaneous stroke direction (HN, H1, H2, H3), by means of a guide device.

4. The input device (1, 1‴, 1"", 1""', 1‴‴) as claimed in claim 1 or 2, **characterized in that** the actuation element (2, 2‴, 2ʺʺ, 2ʺʺ′, 2‴‴) is mounted in the input device (1, 1‴, 1"", 1ʺʺ′, 1"""), displaceably in the one or more displacement directions (V1, V2, V3) and movably in the respectively instantaneous stroke direction (HN, H1, H2, H3), by means of an elastic element (4.3).

5. The input device (1, 1‴, 1"", 1ʺʺ′, 1""") as claimed in any one of claims 1 to 4, **characterized in that** one of the actuation positions (B1, B2, B3, B1", B2") is a neutral position (N, N", N‴) in which the actuation element (2, 2‴, 2ʺʺ, 2ʺʺ′, 2‴‴) is arranged in the absence of actuation.

6. The input device (1, 1‴, 1"", 1ʺʺ′, 1""") as claimed in any one of claims 1 to 5, **characterized in that** the actuation range (A) is circular, wherein the neutral position (N, N", N‴) is optionally arranged in the center of the circular actuation range (A).

7. The input device (1, 1‴, 1"", 1ʺʺ′, 1""") as claimed in any one of claims 1 to 6, **characterized in that** the control device (3, 3", 3‴, 3ʺʺ, 3ʺʺ′) is configured such that the actuation element (2, 2"', 2"", 2ʺʺ′, 2‴‴) is at least partially lowerable or lowered into the input device (1, 1‴, 1"", 1""', 1""") in the respectively instantaneous stroke direction (HN, H1, H2, H3) when said actuation element is displaced, in particular optionally out of the neutral position (N, N", N‴), in the one or more displacement directions (V1, V2, V3).

8. The input device (1, 1‴, 1"", 1ʺʺ′, 1""") as claimed in any one of claims 1 to 7, **characterized in that** the control device (3, 3", 3‴, 3ʺʺ, 3ʺʺ′) is configured, and interacts with the actuation element (2, 2‴, 2"", 2ʺʺ′, 2"""), such that positive control of the stroke movement in a manner dependent on the displacement of the actuation element (2, 2‴, 2ʺʺ, 2ʺʺ′, 2‴‴) in the one or more displacement directions (V1, V2, V3) is implemented.

9. The input device (1, 1‴, 1"", 1ʺʺ′, 1""") as claimed in any one of claims 1 to 8, **characterized in that** the control device (3, 3", 3‴, 3"", 3ʺʺ′) comprises a control element (3.1, 3.1", 3.1‴, 3.1"") with a control surface (3.2), and the actuation element (2, 2‴, 2ʺʺ, 2ʺʺ′, 2‴‴) has a control section (2.3) for interaction with the control surface (3.2), wherein the control surface (3.2) is configured, and arranged with respect to the actuation element (2, 2‴, 2"", 2ʺʺ′, 2"""), such that, during the displacement of the actuation element (2, 2‴, 2ʺʺ, 2ʺʺ′, 2""") in the one or more displacement directions (V1, V2, V3), the stroke movement of the actuation element (2, 2‴, 2ʺʺ, 2ʺʺ′, 2‴‴) in the respectively instantaneous stroke direction (HN, H1, H2, H3) is controllable or controlled by interaction of the control section (2.3) with the control surface (3.2).

10. The input device (1, 1‴, 1"", 1ʺʺ′, 1""") as claimed in claim 9, **characterized in that** the control element (3.1, 3.1", 3.1‴, 3.1"") is arranged in the input device (1, 1"', 1ʺʺ, 1ʺʺ′, 1‴‴) such that it can be exchanged by a user, such that different control elements (3.1, 3.1", 3.1‴, 3.1"") with different control surfaces (3.2) can be inserted into the input device (1, 1‴, 1ʺʺ, 1ʺʺ′, 1""").

11. The input device (1, 1‴, 1"", 1ʺʺ′, 1""") as claimed in claim 10, **characterised in that** the control element (3.1, 3.1", 3.1‴, 3.1"") has an, in particular curved, control surface (3.2) for the abutment of a control section (2.3) of an actuation element (2, 2'", 2"", 2ʺʺ′, 2‴‴) of the input device (1, 1‴, 1ʺʺ, 1ʺʺ′, 1‴‴).

12. An electronic unit, in particular a mobile electronic unit, having an input device (1, 1‴, 1ʺʺ, 1ʺʺ′, 1""") as claimed in any one of claims 1 to 10.

13. The electronic unit as claimed in the preceding claim, **characterized in that** it is a game controller.

14. The electronic unit as claimed in either one of the two preceding claims for installation in a vehicle, in particular in an automobile.

## Revendications

1. Dispositif de saisie (1, 1‴, 1ʺʺ, 1ʺʺ′, 1‴‴), destiné notamment à un appareil électronique, de préférence à un contrôleur de jeu, comprenant
a) un élément d'actionnement (2, 2‴, 2ʺʺ, 2ʺʺ′, 2‴‴), destiné à l'actionnement du dispositif de saisie (1, 1‴, 1ʺʺ, 1ʺʺ′, 1‴‴) par un utilisateur, pourvu d'une partie d'actionnement (2.2, 2.2ʺ, 2.2‴, 2.2‴‴) accessible par l'extérieur du dispositif de saisie (1, 1"', 1ʺʺ, 1ʺʺ′, 1‴‴),
b) l'élément d'actionnement (2,''', 2ʺʺ, 2ʺʺ′, 2‴‴) étant susceptible d'être amené par l'utilisateur dans plusieurs positions d'actionnement (B1, B2, B3, B1ʺ, B2ʺ) définissant une plage d'actionnement (A),
c) par déplacement dans une ou plusieurs directions de déplacement (V1, V2, V3), situées notamment dans un ou plusieurs, notamment dans sensiblement un plan de déplacement (V, V", V'"), l'élément d'actionnement (2, 2‴, 2ʺʺ, 2ʺʺ′, 2‴‴) étant déplaçable dans les positions d'actionnement (B1, B2, B3, B1ʺ, B2") et
d) des moyens électroniques de détection de la position étant présents, qui détectent directement ou indirectement une position d'actionnement (B1, B2, B3, B1", B2") momentanée de l'élément d'actionnement (2, 2‴, 2ʺʺ, 2ʺʺ′, 2‴‴),
le dispositif de saisie **caractérisé en ce que**
e) l'élément d'actionnement (2, 2‴, 2ʺʺ, 2ʺʺ′, 2‴‴) est guidé en étant mobile dans le dispositif de saisie (1, 1‴, 1ʺʺ, 1ʺʺ′, 1‴‴), dans une direction de levage (HN, H1, H2, H3) orientée à la perpendiculaire d'une direction de déplacement (v1, v2) respectivement momentanée et
f) un dispositif de commande (3, 3", 3‴, 3ʺʺ, 3ʺʺ′) étant présent, à l'aide duquel, lors d'un déplacement de l'élément d'actionnement (2, 2‴, 2ʺʺ, 2ʺʺ′, 2‴‴) dans la plage d'actionnement (A), dans l'une ou les plusieurs directions de déplacement, un mouvement de levage de l'élément d'actionnement (2, 2‴, 2ʺʺ, 2ʺʺ′, 2‴‴) dans la direction de levage (HN, H1, H2, H3) momentanée est susceptible d'être commandé ou est commandé en fonction du déplacement de l'élément d'actionnement (2, 2‴, 2ʺʺ, 2ʺʺ′, 2‴‴),
par le dispositif de commande (3, 3", 3‴, 3ʺʺ, 3ʺʺ′), un profil de levage d'un point de l'élément d'actionnement (2, 2‴, 2ʺʺ, 2ʺʺ′, 2‴‴) étant déterminé,
le profil de levage désignant une trajectoire qu'effectue le point de l'élément d'actionnement (2, 2‴, 2ʺʺ, 2ʺʺ′, 2‴‴) lors d'un mouvement de levage et de déplacement superposé.

2. Dispositif de saisie (1, 1‴, 1ʺʺ, 1ʺʺ′, 1‴‴) selon la revendication 1, **caractérisé en ce que** toutes les directions de déplacement (v1, v2) momentanées se situent strictement dans le plan de déplacement (V, V", V'") et les directions de levage (HN, H1, H2, H3) momentanées se trouvent dans chaque position d'actionnement de l'élément d'actionnement (2, 2‴, 2ʺʺ, 2ʺʺ′, 2‴‴) à la perpendiculaire du plan de déplacement (V, V", V‴) et sont orientées le long d'une direction de levage commune.

3. Dispositif de saisie (1, 1‴, 1ʺʺ, 1ʺʺ′, 1‴‴) selon la revendication 1 ou 2, **caractérisé en ce que** l'élément d'actionnement (2, 2‴, 2ʺʺ, 2ʺʺ′, 2‴‴) est déplaçable dans le dispositif de saisie (1, 1‴, 1ʺʺ, 1ʺʺ′, 1‴‴) par l'intermédiaire d'un dispositif de guidage dans l'une ou les plusieurs directions de déplacement (V1, V2, V3) et est logé en étant guidé de manière mobile dans la direction de levage (HN, H1, H2, H3) momentanée respective.

4. Dispositif de saisie (1, 1‴, 1ʺʺ, 1ʺʺ′, 1‴‴) selon la revendication 1 ou 2, **caractérisé en ce que** l'élément d'actionnement (2, 2‴, 2ʺʺ, 2ʺʺ′, 2‴‴) est déplaçable dans le dispositif de saisie (1, 1‴, 1ʺʺ, 1ʺʺ′, 1‴‴) par l'intermédiaire d'un élément élastique (4.3) dans l'une ou dans les plusieurs directions de déplacement (V1, V2, V3) et est logé en étant guidé de manière mobile dans la direction de levage (HN, H1, H2, H3) momentanée respective.

5. Dispositif de saisie (1, 1‴, 1ʺʺ, 1ʺʺ′, 1‴‴) selon l'une quelconque des revendications 1 à 4, **caractérisé en ce que** l'une des positions d'actionnement (B1, B2, B3, B1ʺ, B2") est une position neutre (N, N", N‴), dans laquelle l'élément d'actionnement (2, 2‴, 2ʺʺ, 2ʺʺ′, 2‴‴) est placé en l'absence d'un actionnement.

6. Dispositif de saisie (1, 1‴, 1ʺʺ, 1ʺʺ′, 1‴‴) selon l'une quelconque des revendications 1 à 5, **caractérisé en ce que** la plage d'actionnement (A) est conçue de forme circulaire, le cas échéant, la position neutre (N, N", N‴) étant placée dans le point médian de la plage d'actionnement (A) de forme circulaire.

7. Dispositif de saisie (1, 1‴, 1ʺʺ, 1ʺʺ′, 1‴‴) selon l'une quelconque des revendications 1 à 6, **caractérisé en ce que** le dispositif de commande (3, 3", 3‴, 3ʺʺ, 3ʺʺ′) est conçu de telle sorte que dans la direction de levage (HN, H1, H2, H3) momentanée respective, l'élément d'actionnement (2, 2‴, 2ʺʺ, 2ʺʺ′, 2‴‴) soit susceptible d'être abaissé ou soit abaissé au moins partiellement dans le dispositif de saisie (1, 1‴, 1ʺʺ, 1ʺʺ′, 1‴‴) lorsque l'on le déplace, notamment le cas échéant hors de la position neutre (N, N", N‴) dans l'une ou les plusieurs directions de déplacement (V1, V2, V3).

8. Dispositif de saisie (1, 1‴, 1ʺʺ, 1ʺʺ′, 1‴‴) selon l'une quelconque des revendications 1 à 7, **caractérisé en ce que** le dispositif de commande (3, 3", 3‴, 3ʺʺ, 3''''') est conçu et coopère avec l'élément d'actionnement (2, 2‴, 2ʺʺ, 2ʺʺ′, 2‴‴) de telle sorte, que l'on soit en présence d'une commande forcée du mouvement de levage en fonction du déplacement de l'élément d'actionnement (2, 2‴, 2ʺʺ, 2ʺʺ′, 2‴) dans l'une ou dans les plusieurs directions de déplacement (V1, V2, V3).

9. Dispositif de saisie (1, 1‴, 1ʺʺ, 1ʺʺ′, 1‴‴) selon l'une quelconque des revendications 1 à 8, **caractérisé en ce que** le dispositif de commande (3, 3", 3‴, 3ʺʺ, 3ʺʺ′) comprend un élément de commande (3.1, 3.1", 3.1‴, 3.1ʺʺ), pourvu d'une surface de commande (3.2) et **en ce que** l'élément d'actionnement (2,‴, 2ʺʺ 2ʺʺ′, 2‴‴) comporte une partie de commande (2.3), destinée à coopérer avec la surface de commande (3.2), la surface de commande (3.2) étant conçue et placée en rapport de l'élément d'actionnement (2, 2‴, 2ʺʺ, 2ʺʺ′, 2‴‴) de telle sorte, que lors du déplacement de l'élément d'actionnement (2, 2‴, 2ʺʺ, 2ʺʺ′, 2‴‴) dans l'une ou dans les plusieurs directions de déplacement (V1, V2, V3), par coopération de la partie de commande (2.3) avec la surface de commande (3.2), le mouvement de levage de l'élément d'actionnement (V1, V2, V3) dans la direction de levage (HN, H1, H2, H3) momentanée respective soit susceptible d'être commandé ou soit commandé.

10. Dispositif de saisie (1, 1‴, 1ʺʺ, 1ʺʺ′, 1‴‴) selon la revendication 9, **caractérisé en ce que** l'élément de commande (3.1, 3.1", 3.1‴, 3.1ʺʺ) est placé dans le dispositif de saisie (1, 1''', 1ʺʺ, 1ʺʺ′, 1‴‴) de manière interchangeable par un utilisateur, de telle sorte que différents éléments de commande (3.1, 3.1", 3.1''', 3.1ʺʺ) puissent être utilisés avec diverses surfaces de commande (3.2) dans le dispositif de saisie (1, 1‴, 1ʺʺ, 1ʺʺ′, 1‴‴).

11. Dispositif de saisie (1, 1‴, 1ʺʺ, 1''''', 1‴‴) selon la revendication 10, **caractérisé en ce que** l'élément de commande (3.1, 3.1", 3.1‴, 3.1ʺʺ) comporte une surface de commande (3.2), notamment incurvée, pour l'appui d'une partie de commande (2.3) d'un élément d'actionnement (2, 2‴, 2ʺʺ, 2ʺʺ′, 2‴‴) du dispositif de saisie (1, 1‴, 1ʺʺ, 1ʺʺ′, 1‴‴).

12. Appareil électronique, notamment un appareil électronique mobile, pourvu d'un dispositif de saisie (1, 1‴, 1ʺʺ, 1''''', 1‴‴) selon l'une quelconque des revendications 1 à 10.

13. Appareil électronique selon la revendication précédente, **caractérisé en ce qu'**il est un contrôleur de jeu.

14. Appareil électronique selon l'une quelconque des deux revendications précédentes, destiné à être installé dans un véhicule, notamment dans une automobile
